(19) Europäisches Patentamt
European Patent Office
Office européen des brevets

(11) **EP 4 380 253 A1**

(12) **EUROPEAN PATENT APPLICATION**
published in accordance with Art. 153(4) EPC

(43) Date of publication:
**05.06.2024 Bulletin 2024/23**

(21) Application number: **21951175.5**

(22) Date of filing: **26.07.2021**

(51) International Patent Classification (IPC):
**H04W 56/00** (2009.01)

(52) Cooperative Patent Classification (CPC):
**H04W 56/00**

(86) International application number:
**PCT/CN2021/108511**

(87) International publication number:
**WO 2023/004557 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **FU, Zhe**
  **Dongguan, Guangdong 523860 (CN)**
• **LU, Qianxi**
  **Dongguan, Guangdong 523860 (CN)**
• **LENG, Bingxue**
  **Dongguan, Guangdong 523860 (CN)**

(74) Representative: **Ipside**
  **7-9 Allée Haussmann**
  **33300 Bordeaux Cedex (FR)**

(54) **TIME SYNCHRONIZATION METHOD AND APPARATUS, AND TERMINAL DEVICE**

(57) Provided in the embodiments of the present application are a time synchronization method and apparatus, and a terminal device. The method comprises: a first terminal synchronizing a first time, wherein the first time is based on the time of a time sensitive network (TSN), and the first terminal is a TSN ingress node of a first network.

```
┌──────────┐                    ┌──────────┐
│  First   │                    │  Second  │
│ terminal │                    │ terminal │
└────┬─────┘                    └────┬─────┘
     │   S7013, synchronization of a first time  │
     │                                 │
```

**FIG. 7C**

**EP 4 380 253 A1**

**Description**

TECHNICAL FIELD

Embodiments of the disclosure relate to the technical field of mobile communications, and in particular to a time synchronization method and apparatus, and a terminal device.

BACKGROUND

In order to support high-accuracy transmission requirements of Ultra Reliability and Low Latency Communication (URLLC) services, synchronous enhancement technical support has been provided in a URLLC project of Revision 16/17 (R16/17) of the 3rd Generation Partnership Project (3GPP). Based on transmission requirements of latency and reliability, a concept of Time Sensitive Network (TSN) or Time Sensitive Communication (TSC) is introduced in the Industrial Internet of Things (IIoT). In the TSN, a 5th generation (5G) system is integrated into the TSN as a TSN bridge to provide services for the TSN. Such enhancement is not supported in the existing vehicle to everything (V2X)/sidelink (SL).

SUMMARY

Embodiments of the disclosure provide a time synchronization method and apparatus, and a terminal device.

A time synchronization method according to an embodiment of the disclosure includes the following operation.

A first terminal performs synchronization of a first time. The first time is a time based on a TSN, and the first terminal is a TSN ingress node of a first network.

A time synchronization method according to an embodiment of the disclosure includes the following operation.

A second terminal performs synchronization of a first time. The first time is a time based on a TSN, and the second terminal is a TSN egress node of a first network.

A time synchronization apparatus according to an embodiment of the disclosure is applied to a first terminal and includes a first synchronization unit.

The first synchronization unit is configured to perform synchronization of a first time. The first time is a time based on a TSN, and the first terminal is a TSN ingress node of a first network.

A time synchronization apparatus provided an embodiment of the disclosure is applied to a second terminal and includes a third synchronization unit.

The third synchronization unit is configured to perform synchronization of a first time. The first time takes a clock source of a TSN as a time base, and the second terminal is a TSN egress node of a first network.

A terminal device according to an embodiment of the disclosure may be the first terminal or the second terminal in the above solutions, and includes a processor and a memory. The memory is configured to store a computer program. The processor is configured to call and run the computer program stored in the memory, to execute the above time synchronization methods.

A chip according to an embodiment of the disclosure is configured to implement the above time synchronization methods.

Specifically, the chip includes a processor configured to call and run a computer program from a memory, to cause a device installed with the chip to execute the above time synchronization methods.

A computer-readable storage medium according to an embodiment of the disclosure is configured to store a computer program. The computer program enables a computer to execute the above time synchronization methods.

A computer program product according to an embodiment of the disclosure includes computer program instructions. The computer program instructions enable a computer to execute the above time synchronization methods.

A computer program according to an embodiment of the disclosure enables a computer to execute the above time synchronization methods when run thereon.

With the above technical solutions, the TSN ingress node of the first network or the egress node of the first network performs time synchronization taking the clock source of the TSN as a time base, improving clock synchronization accuracy between the first terminal and the second terminal, achieving synchronization enhancement between the terminals, and ensuring accurate transmission requirements of TSC services.

BRIEF DESCRIPTION OF THE DRAWINGS

The drawings described herein are used to provide a further understanding of the disclosure and constitute a part of the disclosure. Exemplary embodiments of the disclosure and descriptions thereof are used to explain the disclosure and do not constitute an improper limitation of the disclosure. In the drawings:

FIG. 1 is a schematic diagram of an application scenario according to an embodiment of the disclosure.

FIG. 2 is a schematic architectural diagram of another communication system according to an embodiment of the disclosure.

FIG. 3 is a schematic architectural diagram of another communication system according to an embodiment of the disclosure.

FIG. 4 is a schematic diagram of an optional structure of a TSN system according to an embodiment of the disclosure.

FIG. 5 is an optional structure of a TSN system according to an embodiment of the disclosure.

FIG. 6 is time synchronization for a 5G system according to an embodiment of the disclosure.

FIG. 7A is an optional schematic flowchart of a time synchronization method according to an embodiment of the disclosure.

FIG. 7B is an optional schematic flowchart of a time synchronization method according to an embodiment of the disclosure.

FIG. 7C is an optional schematic flowchart of a time synchronization method according to an embodiment of the disclosure.

FIG. 8 is an optional schematic diagram of a first time synchronization according to an embodiment of the disclosure.

FIG. 9 is an optional schematic diagram of a first time synchronization according to an embodiment of the disclosure.

FIG. 10 is an optional schematic diagram of a first time synchronization according to an embodiment of the disclosure.

FIG. 11 is an optional schematic diagram of a first time synchronization according to an embodiment of the disclosure.

FIG. 12 is a schematic diagram of an optional scenario of a time synchronization method according to an embodiment of the disclosure.

FIG. 13 is a schematic diagram of an optional scenario of a time synchronization method according to an embodiment of the disclosure.

FIG. 14 is a schematic diagram of an optional scenario of a time synchronization method according to an embodiment of the disclosure.

FIG. 15 is a schematic diagram of an optional scenario of a time synchronization method according to an embodiment of the disclosure.

FIG. 16 is a schematic diagram of an optional scenario of a time synchronization method according to an embodiment of the disclosure.

FIG. 17 is a schematic diagram of an optional scenario of a time synchronization method according to an embodiment of the disclosure.

FIG. 18 is a schematic diagram of an optional structure of a time synchronization apparatus according to an embodiment of the disclosure.

FIG. 19 is a schematic diagram of an optional structure of a time synchronization apparatus according to an embodiment of the disclosure.

FIG. 20 is a schematic structural diagram of a communication device according to an embodiment of the disclosure.

FIG. 21 is a schematic structural diagram of a chip according to an embodiment of the disclosure.

FIG. 22 is a schematic block diagram of a communication system according to an embodiment of the disclosure.

DETAILED DESCRIPTION

The technical solutions in the embodiments of the disclosure will be described below with reference to the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

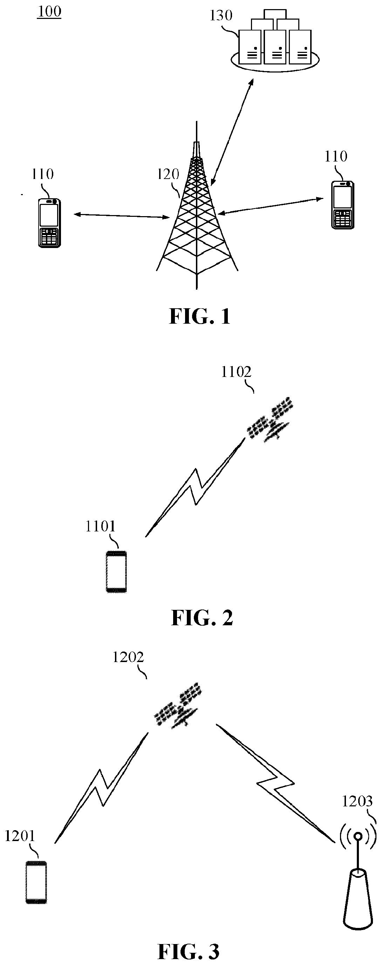

FIG. 1 is a schematic diagram of an application scenario according to an embodiment of the disclosure.

As illustrated in FIG. 1, a communication system 100 may include a terminal device 110 and a network device 120. The network device 120 may communicate with the terminal device 110 through an air interface. Multi-service transmission is supported between the terminal device 110 and the network device 120.

It should be understood that the embodiments of the disclosure is only exemplified by the communication system 100, however, the embodiments of the disclosure are not limited thereto. That is, the technical solutions of the embodiments of the disclosure may be applied to various communication systems, such as a Long Term Evolution (LTE) system, LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a 5th generation (5G) communication system (also referred to as a New Radio (NR) communication system), or a future communication system, etc.

In the communication system 100 illustrated in FIG. 1, the network device 120 may be an access network device communicating with the terminal device 110. The access network device may provide communication coverage for a specific geographical area and may communicate with the terminal device 110 (e.g., a User Equipment (UE)) within the coverage area.

The network device 120 may be an Evolutional Node B (eNB or eNodeB) in a LTE system, or a Next Generation Radio Access Network (NG RAN) device, or a Node B (gNB) in an NR system, or a wireless controller in a Cloud Radio Access Network (CRAN). Or, the network device 120 may be a relay station, an access point (AP), a vehicle-mounted device, a wearable device, a hub, a switch, a bridge, a router, or a network device in a future evolutional Public Land Mobile Network (PLMN), etc.

The terminal device 110 may be any terminal device, and includes, but is not limited to, a terminal device connected to the network device 120 or another terminal device via a wired or wireless connection.

For example, the terminal device 110 may refer to an access terminal, a UE, a subscriber unit, a subscriber station, a mobile station, a mobile radio station, a remote station, a remote terminal, a mobile device, a user terminal, a terminal, a wireless communication device, a user agent or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a 5G network, a terminal device in a future evolved PLMN or the like.

The terminal device 110 may be used for Device to Device (D2D) communication.

The wireless communication system 100 may also include a core network device 130 that communicates with a base station. The core network device 130 may be a 5G Core (5GC) device, for example, an Access and Mobility Management Function (AMF), an Authentication Server Function (AUSF), a User Plane Function (UPF), and for another example, a Session Management Function (SMF). In an example, the core network device 130 may also be an Evolved Packet Core (EPC) device in the LTE network, for example, a Session Management Function + Core Packet Gateway (SMF+PGW-C) device. It should be understood that SMF+PGW-C may simultaneously achieve the functions that SMF and PGW-C may perform. During the evolution of the network, the core network device may also be called other names or form a new network entity by dividing the functions of the core network, which is not limited by the embodiments of the disclosure.

The various functional units in the communication system 100 may also communicate with each other by establishing connections via the next generation network (NG) interface.

For example, the terminal device establishes an air interface connection with the access network device through a Uu interface for transmission of user plane data and control plane signaling; the terminal device may establish a control plane signaling connection with the AMF through an NG interface 1 (referred to as N1); the access network device, such as a next generation wireless access base station (gNB), may establish a user plane data connection with the UPF through an NG interface 3 (referred to as N3); the access network device may establish a control plane signaling connection with the AMF through an NG interface 2 (referred to as N2); the UPF may establish a control plane signaling connection with the SMF through an NG interface 4 (referred to as N4); the UPF may exchange user plane data with a data network through an NG interface 6 (referred to as N6); the AMF may establish a control plane signaling connection with the SMF through an NG interface 11 (referred to as N11); the SMF may establish a control plane signaling connection with a Policy Control Function (PCF) through an NG interface 7 (referred to as N7).

FIG. 1 exemplarily illustrates one base station, one core network device and two terminal devices. In an example, the wireless communication system 100 may include multiple base station devices, and other numbers of terminal devices may be included in coverage of each base station, which are not limited in the embodiments of the disclosure.

The 3GPP is studying a Non Terrestrial Network (NTN) technology. The NTN usually provides communication services to terrestrial users by way of satellite communication. Compared to terrestrial cellular network communication, the satellite communication has many unique advantages. Firstly, the satellite communication is not restricted by users' geographical areas. For example, a general land communication cannot cover areas such as oceans, mountains, deserts, or the like where communication devices cannot be installed or areas where communication coverage is not made due to sparse population. However, for the satellite communication, since a satellite may cover a large ground area, and the satellite may move on an orbit around the earth, every corner of the earth may be theoretically covered by the satellite communication. Secondly, the satellite communication has a great social value. The satellite communication may cover remote mountainous regions and poor and backward countries or regions at a lower cost, so that people in these regions enjoy advanced voice communications and mobile Internet technologies, which is beneficial to narrow digital divide with developed regions and promote development of these regions. Thirdly, the satellite communication has a long distance, and communication cost is not increased significantly as the communication distance increases. Finally, the satellite communication has high stability and is not restricted by natural disasters.

The NTN technology may be combined with various communication systems. For example, the NTN technology may be combined with an NR system to form an NR-NTN system. For another example, the NTN technology may be combined with an IoT system to form an IoT-NTN system. As an example, the IoT-NTN system may include an NB-IoT-NTN system and an eMTC-NTN system.

EP 4 380 253 A1

FIG. 2 is a schematic architectural diagram of another communication system according to an embodiment of the disclosure.

As illustrated in FIG. 2, the communication system includes a terminal device 1101 and a satellite 1102, and wireless communication may be performed between the terminal device 1101 and the satellite 1102. A network formed between the terminal device 1101 and the satellite 1102 may also be referred to as an NTN. In the architecture of the communication system illustrated in FIG. 2, the satellite 1102 may have functions of a base station, and direct communication may be performed between the terminal device 1101 and the satellite 1102. In the architecture of the system, the satellite 1102 may be referred to as a network device. In some embodiments of the disclosure, the communication system may include multiple network devices 1102, and other numbers of terminal devices may be included in coverage of each network device 1102, which are not limited in the embodiments of the disclosure.

FIG. 3 is a schematic architectural diagram of another communication system according to an embodiment of the disclosure.

As illustrated in FIG. 3, the communication system includes a terminal device 1201, a satellite 1202 and a base station 1203, wireless communication may be performed between the terminal device 1201 and the satellite 1202, and communication may be performed between the satellite 1202 and the base station 1203. A network formed among the terminal device 1201, the satellite 1202 and the base station 1203 may also be referred to as an NTN. In the architecture of the communication system illustrated in FIG. 3, the satellite 1202 may not have functions of a base station, and communication between the terminal device 1201 and the base station 1203 needs to be relayed through the satellite 1202. In the architecture of the system, the base station 1203 may be referred to as a network device. In some embodiments of the disclosure, the communication system may include multiple network devices 1203, and other numbers of terminal devices may be included in coverage of each network device 1203, which are not limited in the embodiments of the disclosure. The network device 1203 may be the network device 120 in FIG. 1.

It should be understood that the above satellite 1102 or satellite 1202 includes, but is not limited to: a Low-Earth Orbit (LEO) satellite, a Medium-Earth Orbit (MEO) satellite, a Geostationary Earth Orbit (GEO) satellite, a High Elliptical Orbit (HEO) satellite, etc. The satellite may cover the ground with multiple beams. For example, a satellite may form tens or even hundreds of beams to cover the ground. In other words, a beam of the satellite may cover a ground area with a diameter of tens to hundreds of kilometers (km), to ensure coverage of the satellite and improve system capacity of the whole satellite communication system.

As an example, an altitude range of the LEO satellite may be 500 km to 1,500 km, and correspondingly, an orbital period of the LEO satellite may be about 1.5 hours to 2 hours, a signal propagation delay of single-hop communication between users may be usually less than 20 milliseconds, and a maximum visibility time of the satellite may be 20 minutes. The LEO satellite has a short signal propagation distance and a small link loss, and has a low transmission power requirement to the user terminal. An orbit altitude of the GEO satellite may be 35,786 km, a period of the GEO satellite rotating around the earth may be 24 hours, and a signal propagation delay of single-hop communication between users may usually be 250 milliseconds.

In order to ensure coverage of the satellite and improve system capacity of the whole satellite communication system, the satellite covers the ground with multiple beams. A satellite may form tens or even hundreds of beams to cover the ground, and a beam of the satellite may cover a ground area with a diameter of tens to hundreds of kilometers.

It should be noted that FIG. 1 to FIG. 3 merely exemplarily illustrate the system to which the present disclosure is applied, but the method in the embodiments of the disclosure may also be applied to other systems. Terms "system" and "network" in the disclosure may usually be interchanged in the disclosure. In the disclosure, the term "and/or" is only an association relationship describing associated objects and represents that three relationships may exist. For example, A and/or B may represent three conditions: i.e., independent existence of A, existence of both A and B, and independent existence of B. In addition, character "j" in the disclosure usually represents that previous and next associated objects form an "or" relationship. It is also to be understood that the term "indication" in embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. It is also to be understood that the term "correspondence" in embodiments of the present disclosure may indicate a direct or indirect correspondence between the two elements, or may indicate an association between the two elements, or may indicate a relationship of indicating and being indicated, configuring and being configured, etc. It is also to be understood that the term "predefined" or "predefined rules" in embodiments of the present disclosure may be achieved by pre-storing corresponding codes, tables or other manners for indicating relevant information in devices (e.g., including a terminal device and a network device). The specific implementation is not limited in the present disclosure. For example, "predefined" may refer to those defined in a protocol. It is also to be understood that in this disclosure, "protocol" may refer to a standard protocol in the field of communication, which may include, for example, a LTE protocol, NR protocol and relevant protocol applied in the future communication system, which is not limited in the present disclosure.

In terms of functions provided by satellites, the satellites may be divided into two types, i.e., a transparent payload satellite and a regenerative payload satellite. The transparent payload satellite only provides wireless frequency filtering, frequency conversion and amplification functions, and only provides transparent forwarding of a signal and does not change the forwarded waveform signal. The regenerative payload satellite may provide demodulation/decoding, routing/conversion and encoding/modulation functions in addition to wireless frequency filtering, frequency conversion and amplification functions, and may have part or all of functions of a base station.

In order to facilitate understanding the technical solutions of the embodiments of the disclosure, relevant technologies of the embodiments of the disclosure are described below. The following relevant technologies used as optional solutions may be arbitrarily combined with the technical solutions of the embodiments of the disclosure, all of which fall within the scope of protection of the embodiments of the disclosure.

In order to meet high-accuracy transmission requirements of Ultra Reliability and Low Latency Communication (URLLC) services, synchronous enhancement technical support is made in a URLLC project of Revision 16/17 (R16/17). For example, two terminals are used as nodes of a Time Sensitive Communication (TSC) service respectively for clock synchronization in a Time Sensitive Network (TSN) system. Synchronization accuracy is 1 microsecond (us). Such enhancement is not supported in the existing vehicle to everything (V2X)/sidelink (SL).

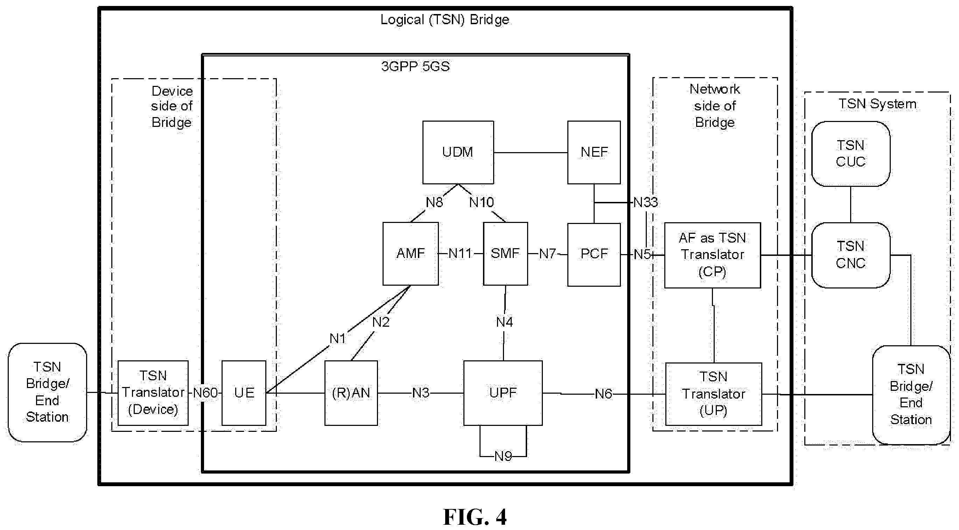

R16 5G Industrial Internet of Things (IIoT) needs to support transmission of factory automation, transport industry, electrical power distribution and other services in a 5G System (5GS). Based on transmission requirements of latency and reliability, a concept of TSN or TSC is introduced in IIoT. The 5GS provides a TSC service. As illustrated in FIG. 4, the 5GS is integrated into a TSN system as a logical TSN bridge, to serve the TSN system and services. In this regard, the NR system needs to provide lower latency assurance and higher clock synchronization accuracy, so that when a factory automation service is transmitted in the 5G network, each point of mechanical operations is operated and connected accurately and conform to time requirements.

As illustrated in FIG. 4, a network architecture of the 5GS includes a UPF, an AMF, a SMF, a Policy Control Function (PCF), a Unified Data Management (UDM), a Network Exposure Function (NEF), and an Application Function (AF).

As illustrated in FIG. 4, the network architecture of the 5GS further includes a (Radio (R)) Access Network (AN) and a UE.

The logical TSN bridge is connected to a TSN translator, to implement user plane interaction between the TSN system and the 5GS. The TSN translator includes a Device-side TSN Translator (DS-TT) and a Network-side TSN Translator (NW-TT). The NW-TT includes a Control Plane (CP) TSN TT and a User Plane (UP) TSN TT. The DS-TT and the UE constitute a device-side bridge between the 5GS and a TSN end station or TSN bridge, and the NW-TT constitutes a network-side bridge between the 5GS and the TSN system.

The TSN system includes a TSN Centralized User Configuration (CUC), a TSN Centralized Network Configuration (CNC) C, the TSN end station or TSN bridge.

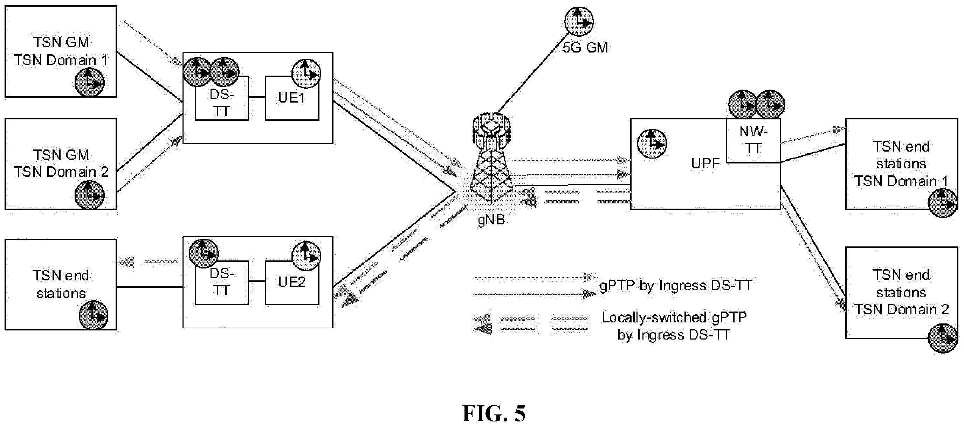

As illustrated in FIG. 5, UE1 used as a TSN end station may be connected to UE2 or the UPF. In FIG. 5, in TSNDomain1 and TSNDomain2, UE1 used as the TSN end station is connected to the UPF and connected to different TSN end stations through the UPF. SN Domain1 and the TSNDomain2 are maintained by different TSN Grand Masters (GMs). UE1 used as the TSN end station is connected to UE2 through a gNB, to be connected to TSN end stations.

In a scenario where UE1 is connected to the UPF, a time synchronization method for the TSN system includes the following operations at S51A to S56A.

At S51A, a Protocol Data Unit (PDU) session is established between the UE1 and the gNB, the UPF, and the AMF/SMF/PCF/TSN AF.

At S52A, a TSN master clock, i.e., the GM, sends clock information to UE1 through a generic Precision Time Protocol (gPTP) message with a latency of $t\_1$, and the clock information is set to $T\_gm$.

At S53A, after the gPTP arrives, UE1 uses a 5G internal clock to record the time when the gPTP arrives as an ingress timestamping $T\_i$. Then, UE1 sends the gPTP message to the gNB through an uplink (UL) air interface.

At S54A, the gNB transparently transmits the gPTP message to the UPF.

At S55A, after receiving the gPTP message, the UPF sends the gPTP message to the TSN end station with a latency of $t\_2$, and uses the 5G internal clock to record the time when the gPTP leaves the 5GS as an egress timestamping $T\_e$.

At S56A, a clock of the TSN end station is updated to $T\_gm+t\_1+t\_2+T\_e-T\_i$.

In a scenario where UE1 is connected to the terminal (UE2), a time synchronization method for the TSN system includes the following operations at S51B to S56B.

At S51B, a PDU session is established between the UE1 and the gNB, the UPF, and the AMF/SMF/PCF/TSN AF.

At S52B, a TSN master clock sends clock information to UE1 through a gPTP message with a latency of $t\_1$, and the clock information is set to $T\_gm$.

At S53B, after the gPTP arrives, UE1 uses a 5G internal clock to record the time when the gPTP arrives as $T\_i$. Then, UE1 sends the gPTP message to the gNB through an UL air interface.

At S54B, the gNB transparently transmits the gPTP message to UE2.

At S55B, after receiving the gPTP message, UE2 sends the gPTP message to the TSN end station with a latency of t_2, and uses the 5G internal clock to record the time when the gPTP leaves the 5GS as T_e.

At S56B, a clock of the TSN end station is updated to T_gm+t_1+t_2+T_e-T_i.

In the above solutions, synchronization of the TSC is achieved through synchronization of the SGS. In order to achieve synchronization within the 5GS, the following mechanisms need to be supported.

- The gNB sends System Information Block (SIB) 9, or downlink (DL) information transfer to send synchronization information, in which the synchronization information includes a reference System Frame Number (SFN), time information (such as hours, minutes, seconds), etc.
- A Propagation Delay Compensation (PDC) mechanism is required. The PDC mechanism includes a PDC mechanism based on Timing Advance (TA) and a PDC mechanism based on Round-Trip Time (RTT).

A cellular communication system is a synchronization system. Communication between a terminal and a network should ensure that the terminal is synchronized with the network at first. The terminal receives a synchronization signal sent by the network and obtains synchronization with the network, so that the terminal may receive data sent by the network. The network adjusts TA for the terminal, so that UL transmission data of each terminal reaches the network synchronously.

In SL communication, synchronization is also required between terminals, to ensure normal transmission and reception of data. Before performing the SL communication, the terminal should determine a synchronization source at first, and obtain synchronization information according to the synchronization source. The terminal may obtain synchronization information from one of the synchronization sources such as an eNB, a Global Navigation Satellite System (GNSS), a UE, etc.

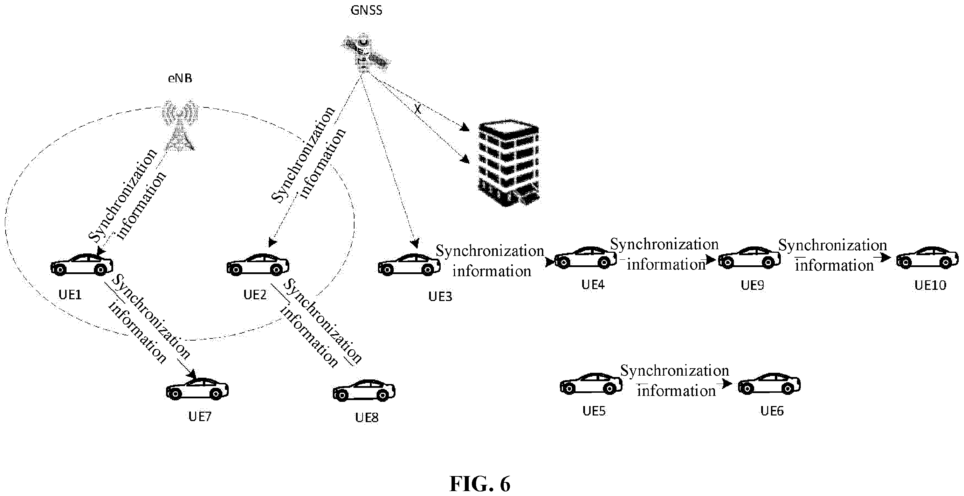

As illustrated in FIG. 6, the synchronization source of UE1 is the eNB, and UE1 is synchronized with the eNB. The synchronization source of UE7 is UE1, and UE7 is synchronized with UE1. The eNB sends synchronization information to UE1, and UE1 sends synchronization information to UE7. UE2 uses the GNSS as the synchronization source and is synchronized with GNSS. The synchronization source of UE8 is UE2, and UE8 is synchronized with UE2. The GNSS sends synchronization information to UE2, and UE2 sends synchronization information to UE8. UE3 uses the GNSS as the synchronization source and is synchronized with GNSS. The synchronization source of UE4 is UE3, and UE4 is synchronized with UE3. The synchronization source of UE9 is UE4, and UE9 is synchronized with UE4. The synchronization source of UE10 is UE10, and UE10 is synchronized with UE10. The GNSS sends synchronization information to UE3, and UE3 sends synchronization information to UE4. The UE4 sends synchronization information to UE9, and UE9 sends synchronization information to UE10. The synchronization source of UE6 is UE5, and UE5 sends synchronization information to UE6. In the communication system illustrated in FIG. 5, UE1 and UE7 perform synchronization within the 5GS, and a clock source for the synchronization is a clock source of the 5GS; UE2, UE8, UE3, UE4, UE9 and UE10 perform synchronization of the GNSS, and a clock source for the synchronization is a clock source of the GNSS; a clock source for synchronization of UE5 and UE6 is a clock source of UE5.

Furthermore, the terminal needs to send a Sidelink Synchronization Signal (SLSS) and a Physical Sidelink Broadcast CHannel (PSBCH) on an SL to assist other terminals to perform synchronization. When a UE is used as a synchronization source of other terminals, the UE is also referred to as a Synchronization Reference UE (SyncRef UE). Synchronization information is sent through the PSBCH, and includes an SFN number, a slot number, or the like corresponding to a Primary Synchronization Signal (PSS)/Secondary Synchronization Signal (SSS).

It may be known from the above contents that synchronization of V2X is SFN-level synchronization, does not involve absolute time information, and does not have requirements on time synchronization accuracy.

How to support URLLC transmission on the SL and ensure high-accuracy clock requirements of the URLLC transmission is not yet considered.

In order to facilitate understanding the technical solutions of the embodiments of the disclosure, the technical solutions of the disclosure are described in detail below through specific embodiments. The above relevant technologies used as optional solutions may be arbitrarily combined with the technical solutions of the embodiments of the disclosure, all of which fall within the scope of protection of the embodiments of the disclosure. The embodiments of the disclosure include at least a part of the following contents.

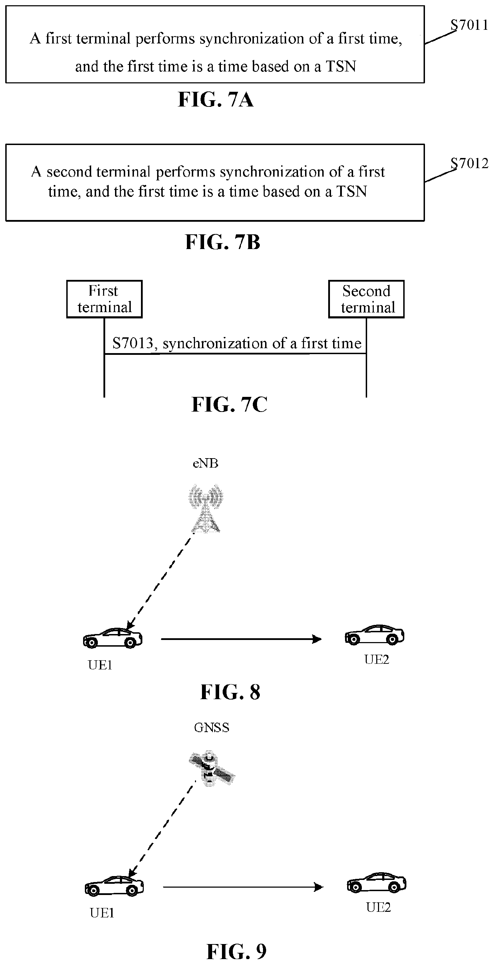

An embodiment of the disclosure provides a time synchronization method, as illustrated in FIG. 7A, the time synchronization method includes the following operation at S7011.

At S7011, a first terminal performs synchronization of a first time, the first time is a time based on a TSN, and the first terminal is a TSN ingress node of a first network.

The first time is a time taking a clock source of the TSN as a time base. For example, when time of the TSN is time 1, the first time is time 1.

An embodiment of the disclosure provides a time synchronization method, as illustrated in FIG. 7B, the time synchronization method includes the following operation at S7012.

At S7012, a second terminal performs synchronization of a first time, the first time is a time based on a TSN, and the first terminal is a TSN egress node of a first network.

An embodiment of the disclosure provides a time synchronization method, applied to a first network including a first terminal and a second terminal. As illustrated in FIG. 7C, the time synchronization method includes the following operation at S7013.

At S7013, the first terminal and the second terminal perform synchronization of a first time. The first time is a time based on a TSN.

In an example, at least one of the first terminal or the second terminal is a node in the TSN.

The first time is a time corresponding to the TSN network, and takes a clock source of the TSN as a time base, i.e., a clock source. The clock source of the TSN is a local clock of a GM in a TSN system, i.e., a global master clock.

In an example, the first terminal is a node or an end station in the TSN.

In an example, the second terminal is a node or an end station in the TSN.

In an example, the first terminal is a node or an end station in the TSN, and the second terminal is a node or an end station in the TSN.

In an example, the first terminal is the TSN ingress node of the first network.

In an example, the second terminal is the TSN egress node of the first network.

In some embodiments, the first terminal performs synchronization of a second time, and the second time is a time based on a mobile network or GNSS.

In some embodiments, the second terminal performs synchronization of a second time, and the second time is a time based on a mobile network or GNSS.

The second time is a time taking a clock source of the mobile network or GNSS as a time base. For example, when time of the mobile network is time 2, the second time is time 2.

Clock sources on which the first time and the second time are based are different, thus there is a time interval between the first time and the second time. In an example, when the first time is time 3 and the second time is time 4, there is a time interval between time 3 and time 4. When the first time passes 0.2 seconds, the second time passes 0.23 seconds.

In an example, the first terminal and the second terminal perform synchronization of a second time, and the second time takes a clock source of the mobile network or GNSS as a time base.

The second time is a time corresponding to the mobile network or GNSS, and takes a clock source of the mobile network or GNSS as a time base, i.e., a clock source.

In an example, the clock source of the mobile network may be a local clock of a base station, and the clock source of the GNSS may be a local clock of a satellite. The mobile network may be a communication system such as LTE, 5GS, a future communication system, etc. The system types of the mobile network are not limited in the embodiments of the disclosure .

When the second time takes the clock source of the mobile network as a time base, the first terminal and the second terminal perform time synchronization within the mobile network.

When the second time takes the clock source of the GNSS as a time base, the first terminal and the second terminal perform time synchronization of the GNSS.

In an example, time accuracy of the first time is equal to or greater than that of the second time.

In an example, time accuracy/accuracy error of the second time is ensured to be the same as time accuracy/accuracy error of the first time, or meet time accuracy/accuracy error requirements of the first time.

In some embodiments, the second time is used to: determine the first time; or, determine a first delay required for a message or packet to pass through the first network, the delay corresponding to the first time; or, determine a second delay required for the message or packet to pass through the first network, the second delay corresponding to the second time; or, remove a gap between the clock source of the TSN and the clock source of the mobile network/GNSS.

Taking the second time determining the first time as an example, the first terminal and the second terminal perform synchronization of the first time based on synchronization of the second time.

Taking the second time determining the first delay required to pass through the TSN node as an example, the first terminal and the second terminal determine a delay (i.e., the first delay) required to pass through the TSN node in the case of taking the clock source of the TSN as a time base, based on the time synchronization within the 5GS.

In an example, the first terminal is terminal A, the second terminal is terminal B, and the terminals are TSN nodes. The terminal A receives message A and sends the message A to the terminal B. When the terminal A and the terminal B are synchronized at the second time, based on synchronization of the second time, the terminal A determines a delay of the message A passing through the terminal A by taking the clock source of the TSN as a time base, that is, a time when the terminal A receives the message A to a time when the message A leaves the terminal A in the case of taking the clock source of the TSN as the time base.

In an example, the first terminal is terminal A, the second terminal is terminal B, and the terminals are TSN nodes. The terminal A receives message A and sends the message A to the terminal B. When the terminal A and the terminal B are synchronized at the second time, based on synchronization of the second time, the terminal A determines a delay of the message A passing through the terminal A by taking the clock source of the TSN as a time base, that is, a time when the message A leaves the terminal A in the case of taking the clock source of the TSN as the time base .

In an example, the first terminal is terminal A, the second terminal is terminal B, and the terminal B is a TSN node. The terminal A receives message A and sends the message A to the terminal B. The terminal B sends the message A out after receiving the message A. When the terminal A and the terminal B are synchronized at the second time, based on synchronization of the second time, the terminal B determines a delay of the message A passing through the terminal B by taking the clock source of the TSN as a time base, that is, a time when from the terminal B receives the message A to a time when the message A leaves the terminal B in the case of taking the clock source of the TSN as the time base.

In an example, the first terminal is terminal A, the second terminal is terminal B, and the terminal B is a TSN node. The terminal A receives message A and sends the message A to the terminal B. The terminal B sends the message A out after receiving the message A. When the terminal A and the terminal B are synchronized at the second time, based on synchronization of the second time, the terminal B determines a delay of the message A passing through the terminal B by taking the clock source of the TSN as a time base, that is, a time when the message A leaves the terminal B in the case of taking the clock source of the TSN as the time base.

In an example, the first terminal is terminal A, the second terminal is terminal B, the terminal A is a TSN node, and the terminal B is a TSN node. The terminal A receives message A and sends the message A to the terminal B. The terminal B sends the message A out after receiving the message A. When the terminal A and the terminal B are synchronized at the second time, the terminal B determines a delay of the message A passing through the terminal A and the terminal B by taking the clock source of the TSN as a time base based on synchronization of the second time, that is, a time when the terminal A receives the message A to a time when the message A leaves the terminal B in the case of taking the clock source of the TSN as the time base.

Taking the second time determining the second delay required to pass through the TSN node as an example, the first terminal and the second terminal determine a delay (i.e., the second delay) required to pass through the TSN node in the case of taking the clock source of the mobile network or GNSS as a time base, based on synchronization of the second time.

In an example, the first terminal is terminal A, the second terminal is terminal B, and the terminals are TSN nodes. The terminal A receives message A and sends the message A to the terminal B. When the terminal A and the terminal B are synchronized at the second time, the terminal A determines a delay of the message A passing through the terminal A by taking the clock source of the mobile network or GNSS as a time base based on synchronization of the second time, that is, a time when the terminal A receives the message A to a time when the message A leaves the terminal A in the case of taking the clock source of the mobile network or GNSS as the time base.

In an example, the first terminal is terminal A, the second terminal is terminal B, and the terminals are TSN nodes. The terminal A receives message A and sends the message A to the terminal B. When the terminal A and the terminal B are synchronized at the second time, the terminal A determines a delay of the message A passing through the terminal A by taking the clock source of the mobile network or GNSS as a time base based on synchronization of the second time, that is, a time when the message A leaves the terminal A in the case of taking the clock source of the mobile network or GNSS as the time base.

In an example, the first terminal is terminal A, the second terminal is terminal B, and the terminal B is a TSN node. The terminal A receives message A and sends the message A to the terminal B. The terminal B sends the message A out after receiving the message A. When the terminal A and the terminal B are synchronized at the second time, the terminal B determines a delay of the message A passing through the terminal B by taking the clock source of the mobile network or GNSS as a time base based on synchronization of the second time, that is, a time when the terminal B receives the message A to a time when the message A leaves the terminal B in the case of taking the clock source of the mobile network or GNSS as the time base.

In an example, the first terminal is terminal A, the second terminal is terminal B, and the terminal B is a TSN node. The terminal A receives message A and sends the message A to the terminal B. The terminal B sends the message A out after receiving the message A. When the terminal A and the terminal B are synchronized at the second time, the terminal B determines a delay of the message A passing through the terminal B by taking the clock source of the mobile network or GNSS as a time base based on synchronization of the second time, that is, a time when the message A leaves the terminal B in the case of taking the clock source of the mobile network or GNSS as the time base.

In an example, the first terminal is terminal A, the second terminal is terminal B, the terminal A is a TSN node, and the terminal B is a TSN node. The terminal A receives message A and sends the message A to the terminal B. The terminal B sends the message A out after receiving the message A. When the terminal A and the terminal B are synchronized at the second time, the terminal B determines a delay of the message A passing through the terminal A and the terminal B by taking the clock source of the TSN as a time base based on synchronization of the second time, that is, a time when the terminal A receives the message A to a time when the message A leaves the terminal B in the case of taking the clock source of the TSN as a time base.

Taking the second time removing the gap between the clock source of the TSN and the clock source of the mobile network or GNSS as an example, the first terminal and the second terminal perform synchronization of the second time taking the clock source of the mobile network or GNSS as a time base. In the case of synchronization of the second time, the gap between the clock source of the TSN and the clock source of the mobile network or GNSS is cancelled, so that the first terminal and the second terminal are synchronized at the first time. Here, when the first terminal and the second terminal are synchronized at the first time, the gap between the clock source of the TSN and the clock source of the mobile network or GNSS is removed.

In some embodiments, the operation that the first terminal performs synchronization of the second time includes the following operation.

The first terminal performs synchronization of the second time based on a first synchronization mode. The first synchronization mode is configured to indicate a first synchronization source.

In some embodiments, the first synchronization source is one of a base station, the GNSS, a second terminal, or a third terminal.

The second terminal is a TSN egress node of the first network. The third terminal is a terminal other than the first terminal and the second terminal.

The second terminal and the first terminal may be located in the same or different base stations.

The third terminal and the first terminal may be located in the same or different base stations. The third terminal may be a synchronization reference terminal for the first terminal.

Taking the first synchronization source being the base station as an example, the base station sends synchronization information to the first terminal, and the first terminal maintains synchronization of the second time with the base station based on the received synchronization information. In such case, the second time takes the clock source of the mobile network as a time base.

In an example, the synchronization information is carried in SIB9 or DL information transfer.

In an example, the synchronization information includes at least one of SFN, time information, uncertainty, synchronization type, or the like.

The base station may be an eNB, gNB, or the like, and the embodiments of the disclosure do not impose any limitation on the mobile network to which the base station belongs.

Taking the first synchronization source being the GNSS as an example, the GNSS sends synchronization information to the first terminal, and the first terminal maintains synchronization of the second time with the GNSS based on the received synchronization information. In such case, the second time takes the clock source of the GNSS as a time base.

Taking the first synchronization source being the second terminal as an example, the second terminal sends synchronization information to the first terminal, and the first terminal maintains synchronization of the second time with the second terminal based on the received synchronization information. In an example, the synchronization source of the second terminal may be a base station, the GNSS or the third terminal.

In an example, the synchronization information is sent through one of an SLSS or a PBSCH.

In an example, the synchronization information includes at least one of an SFN number or a slot number corresponding to a PSS or an SSS.

Taking the first synchronization source being the third terminal as an example, the third terminal sends synchronization information to the first terminal, and the first terminal maintains synchronization of the second time with the third terminal based on the received synchronization information. In an example, the synchronization source of the third terminal may be the second terminal, a base station or the GNSS.

In an example, the synchronization information is sent through one of an SLSS or a PBSCH.

In an example, the synchronization information includes at least one of an SFN number or a slot number corresponding to a PSS or an SSS.

In some embodiments, the first synchronization source is the base station or the second terminal, and the first terminal has GNSS capability or does not have GNSS capability.

In some embodiments, the first synchronization source is the GNSS, and the first terminal has the GNSS capability.

In some embodiments, the first terminal does not need to perform PDC with the first synchronization source in response to the first synchronization source being the GNSS.

In some embodiments, the first terminal performs PDC with the first synchronization source in response to the first synchronization source being the base station or the second terminal or the third terminal.

In an example, the PDC is a TA-based PDC.

In an example, the PDC is an RTT-based PDC.

In some embodiments, the first synchronization mode is determined according to at least one of first information, second information, third information, fourth information, fifth information, sixth information or seventh information.

The first information is configured to indicate whether the first terminal supports SL, V2X or GNSS.

The second information is configured to indicate whether the first terminal establishes a connection with a second terminal.

The third information is configured to indicate a position relationship between the first terminal and a base station.

The fourth information is configured to indicate whether the first terminal is in coverage of the GNSS.

The fifth information is configured to indicate whether the first terminal is in coverage of the base station.

The sixth information is configured to indicate a TSN end station.

The seventh information is configured to indicate whether a service is a TSN service or a time sensitive service.

For the second information, when the first terminal is provided with a PC5 interface, or the first terminal establishes Physical Sidelink Shared Channel (PSSCH) connection with the second terminal, the second information is considered to indicate that the first terminal establishes a connection with the second terminal. Otherwise, the second information is considered to indicate that the first terminal has not established a connection with the second terminal.

The third information may include at least one of reference signal channel quality or path loss of the first terminal. The reference signal channel quality may include at least one of Reference Signal Receiving Quality (RSRQ), Reference Signal Receiving Power (RSPR), Channel Quality Indication (CQI), Signal to Interference plus Noise Ratio (SINR), or the like.

Taking the third information including the RSPR as an example, when a value of the RSPR exceeds the RSPR, the first terminal is considered to be close to the base station; otherwise, the first terminal is considered to be far from the base station.

For the fourth information, when the GNSS signal of the first terminal meets a GNSS signal threshold, the first terminal is considered to be in coverage of the GNSS; otherwise, the first terminal is considered to be out of coverage of the GNSS.

For the sixth information, the TSN end station information may indicate whether the first terminal is a TSN end station, or, whether the second terminal is a TSN end station, or information of a terminal used as the TSN end station.

In the embodiments of the disclosure, when the first terminal is a TSN end station, or the second terminal is a TSN end station, synchronization is performed between the first terminal and the second terminal. In such case, the first terminal takes the second terminal as the synchronization source, or the second terminal takes the first terminal as the synchronization source.

The seventh information indicates whether a service performed by the first terminal is a TSN service or a time sensitive service. The time sensitive service is a service requiring a time accuracy to be higher than a specified time accuracy threshold, or a service requiring latency to be in a certain range or less than or equal to a certain threshold.

In an example, the seventh information includes service information and/or PDU session information. The PDU session information may be information of an established PDU session or a PDU session to be established.

In the embodiments of the disclosure, when the service performed by the first terminal is a time sensitive service, synchronization may be performed between the first terminal and the second terminal. In such case, the first terminal takes the second terminal as the first synchronization source.

In an example, the information for determining the first synchronization mode may be understood as auxiliary information.

In an example, the first synchronization mode only indicates the first synchronization source.

Taking the first synchronization mode being determined according to the first information and the second information as an example, the first information indicates that the first terminal supports the V2X and GNSS, and the second information indicates that the first terminal establishes the PSSCH connection with the second terminal, then the first synchronization source is the GNSS.

Taking the first synchronization mode being determined according to the first information and the fifth information as an example, the first information indicates that the first terminal supports the V2X, and the fifth information indicates that the first terminal is out of coverage of the base station, then the first synchronization source is the second terminal.

Taking the first synchronization mode being determined according to the first information, the fourth information and the fifth information as an example, the first information indicates that the first terminal supports the GNSS, the fourth information indicates that the first terminal is in coverage of the GNSS, and the fifth information indicates that the first terminal is out of coverage of the base station, then the first synchronization source is the GNSS.

Taking the first synchronization mode being determined according to the first information and the fourth information as an example, the first information indicates that the first terminal supports the GNSS, and the fourth information indicates that the first terminal is in coverage of the GNSS, then the first synchronization source is the GNSS.

Taking the first synchronization mode being determined according to the first information and the sixth information as an example, the first information indicates that the first terminal does not support the GNSS, and the first terminal and the second terminal are TSN end stations, then the first synchronization source is the second terminal.

Taking the first synchronization mode being determined according to the second information and the seventh information as an example, the second information indicates that the first terminal establishes a connection with the second terminal, and the seventh information indicates that the service performed by the first terminal is the TSN service, then the first synchronization source is the second terminal.

Taking the first synchronization mode being determined according to the first information as an example, the first information indicates that the first terminal supports the GNSS, then the first synchronization source is the GNSS.

Taking the first synchronization mode being determined according to the second information as an example, the second information indicates that the first terminal establishes a connection with the second terminal, then the first synchronization source is the second terminal.

Taking the first synchronization mode being determined according to the third information as an example, the second information indicates that the first terminal has a PC5 interface with the second terminal, then the first synchronization source is the second terminal.

Taking the first synchronization mode being determined according to the fourth information as an example, the fourth information indicates that the first terminal is in coverage of the GNSS, then the first synchronization source is the GNSS.

Taking the first synchronization mode being determined according to the fifth information as an example, the fifth information indicates that the first terminal is in coverage of the base station, then the first synchronization source is the base station.

Taking the first synchronization mode being determined according to the second information and the third information as an example, the second information indicates that the first terminal has the PC5 interface with the second terminal, and the second information indicates that the first terminal is close to the base station, then the first synchronization source is the base station.

Taking the first synchronization mode being determined according to the first information and the sixth information as an example, the first information indicates that the first terminal supports the GNSS, and the first terminal and the second terminal are TSN end stations, then the first synchronization source is the GNSS.

Taking the first synchronization mode being determined according to the fifth information and the seventh information as an example, the fifth information indicates that the first terminal is in coverage of the base station, and the seventh information indicates that the service of the first terminal is the TSN service, then the first synchronization source is the base station.

In the embodiments of the disclosure, the device for determining the first synchronization mode may include one of the first terminal, the second terminal, a fourth terminal, a core network device, a TSN device, or the like. Here, the fourth terminal and the first terminal may be located in the same or different base stations.

In some embodiments, the operation that the second terminal performs synchronization of the second time includes the following operation.

The first terminal performs synchronization of the second time based on a third synchronization mode. The third synchronization mode is configured to indicate a second synchronization source, and the second synchronization source is a synchronization source for the second terminal.

In some embodiments, the second synchronization source is one of a base station, the GNSS, a first terminal, or a third terminal.

In some embodiments, the second synchronization source is the GNSS, and the second terminal has GNSS capability.

In some embodiments, the second terminal does not need to perform PDC with the second synchronization source in response to the second synchronization source being the GNSS.

In some embodiments, the second terminal performs PDC with the second synchronization source in response to the second synchronization source being the base station or the first terminal or the third terminal.

In some embodiments, the third synchronization mode is based on at least one of eighth information, ninth information, tenth information, eleventh information, twelfth information, thirteenth information, or fourteenth information.

The eighth information is configured to indicate whether the second terminal supports SL, V2X or GNSS.

The ninth information is configured to indicate whether the second terminal establishes a connection with a first terminal.

The tenth information is configured to indicate a position relationship between the second terminal and a base station.

The eleventh information is configured to indicate whether the second terminal is in coverage of the GNSS.

The twelfth information is configured to indicate whether the second terminal is in coverage of the base station.

The thirteenth information is configured to indicate a TSN end station.

The fourteenth information is configured to indicate whether a service is a TSN service or a time sensitive service.

In the embodiments of the disclosure, one or both of the first terminal and the second terminal are synchronized with the base station or the GNSS or the third terminal.

In an example, synchronization sources of the first terminal and the second terminal are the same, which may be understood to indicate that the first terminal and the second terminal are synchronized with the base station or the GNSS or the third terminal.

In an example, synchronization sources of the first terminal and the second terminal are different, which may be understood to indicate that one of the first terminal and the second terminal is synchronized with the base station or the GNSS or the third terminal.

A synchronization reference terminal of the first terminal may be the second terminal or a terminal other than the second terminal, and a synchronization reference terminal of the second terminal may be the first terminal or a terminal other than the first terminal.

The embodiments of the disclosure do not exclude that the first terminal and the second terminal take different terminals as synchronization reference terminals.

Here, the synchronization reference terminals synchronized with the first terminal and the second terminal are not the same synchronization reference terminal.

Taking both of the first terminal and the second terminal being synchronized with the base station or the GNSS or the same synchronization reference terminal as an example, the first synchronization mode includes one of a synchronization mode 1, a synchronization mode 2, or a synchronization mode 3.

In the synchronization mode 1, the first terminal is synchronized with the base station, and the second terminal is synchronized with the base station.

In the synchronization mode 2, the first terminal is synchronized with the GNSS, and the second terminal is synchronized with the GNSS.

In the synchronization mode 3, the first terminal is synchronized with a synchronization reference terminal, and the second terminal is synchronized with the same synchronization reference terminal.

In the synchronization mode 1, the first terminal and the second terminal have the same synchronization source, i.e., the base station.

In an example, the first terminal is UE1, the second terminal is UE2, UE1 is synchronized with the base station, and UE2 is synchronized with the base station.

In the synchronization mode 2, the first terminal and the second terminal have the same synchronization source, i.e., the GNSS.

In an example, the first terminal is UE1, the second terminal is UE2, UE1 is synchronized with the GNSS, and UE2 is synchronized with the GNSS.

In some embodiments, when the first terminal is synchronized with the base station and the second terminal is synchronized with the base station, the first terminal performs PDC with the base station, and the second terminal performs PDC with the base station.

In the synchronization mode 3, the first terminal and the second terminal have the same synchronization source, i.e., the same third terminal.

In some embodiments, when the first terminal is synchronized with the same UE and the second terminal is synchronized with the same UE, the first terminal performs PDC with the UE, and the second terminal performs PDC with the UE.

Taking one of the first terminal and the second terminal being synchronized with the base station or the GNSS or the synchronization reference terminal as an example, the first terminal or the second terminal is synchronized with the base station, or the first terminal or the second terminal is synchronized with the GNSS.

In some embodiments, when the second terminal is synchronized with the GNSS, the second terminal has GNSS capability.

In some embodiments, when the second terminal is synchronized with the base station, the second terminal has GNSS capability or does not have GNSS capability.

In some embodiments, when the first terminal or the second terminal is synchronized with the base station, the first terminal or the second terminal performs PDC with the base station.

In some embodiments, when one of the first terminal and the second terminal is synchronized with the base station or the GNSS, the first synchronization mode further includes that the first terminal is synchronized with the second terminal.

In some embodiments, when the first terminal is synchronized with the second terminal, the first terminal performs PDC with the second terminal.

In an example, the first terminal is synchronized with the base station, and the second terminal is synchronized with the first terminal. At this time, the synchronization source of the first terminal is the base station, and the synchronization source of the second terminal is the first terminal.

In an example, the first terminal is synchronized with the GNSS, and the second terminal is synchronized with the first terminal. At this time, the synchronization source of the first terminal is the GNSS, and the synchronization source of the second terminal is the first terminal.

In an example, the first terminal is synchronized with the second terminal, and the second terminal is synchronized with the base station. At this time, the synchronization source of the first terminal is the second terminal, and the synchronization source of the second terminal is the base station.

In an example, the first terminal is synchronized with the second terminal, and the second terminal is synchronized with the GNSS. At this time, the synchronization source of the first terminal is the second terminal, and the synchronization source of the second terminal is the GNSS.

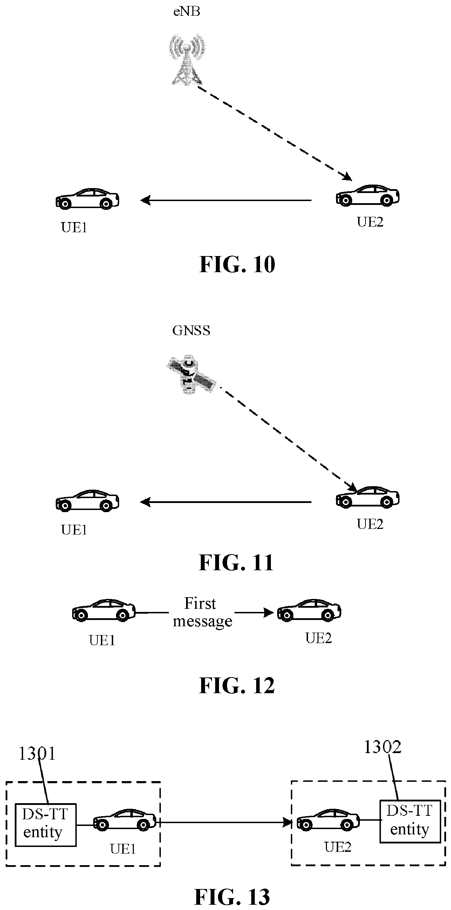

Taking the first terminal being UE1 and the second terminal being UE2 as an example, UE1 and UE2 perform synchronization of the second time, which may be illustrated in FIG. 8 to FIG. 11. In FIG. 8, UE1 is synchronized with a base station, and UE2 is synchronized with UE1; in In FIG. 9, UE1 is synchronized with the GNSS, and UE2 is synchronized with UE1; in FIG. 10, UE1 is synchronized with UE2, and UE2 is synchronized with a base station; in FIG. 1, UE1 is synchronized with UE2, and UE2 is synchronized with the GNSS.

In some embodiments, the first synchronization mode is determined by a terminal to be synchronized.

In an example, the terminal to be synchronized is the second terminal.

In the embodiments of the disclosure, the terminal to be synchronized and the first terminal may be located in the same base station, or may be located in different base stations.

When the terminal to be synchronized and the first terminal are located in different base stations, it is considered that one of the terminals needs to synchronize with another terminal.

In some embodiments, the first synchronization mode further indicates a second synchronization source, and the second synchronization source is a synchronization source of the second terminal.

In some embodiments, the third synchronization mode is further configured to indicate a first synchronization source, the first synchronization source is a synchronization source of a first terminal, and the first terminal is a TSN ingress node of the first network.

When the third synchronization mode indicates the first synchronization source and the second synchronization source, the third synchronization mode may be understood as the first synchronization mode that further indicates the second synchronization source.

In an example, the first synchronization mode indicates the first synchronization source and the second synchronization source.

Taking the first synchronization mode being determined according to the first information and the second information as an example, the first information indicates that the first terminal supports the V2X and GNSS, and the second information indicates that the first terminal establishes the PSSCH connection with the second terminal, then the synchronization source of the first terminal The is the GNSS, and the synchronization source of the second terminal is the first terminal.

Taking the first synchronization mode being determined according to the first information, the fourth information and the fifth information as an example, the first information indicates that the first terminal supports the GNSS, the fourth information indicates that the first terminal is in coverage of the GNSS, and the fifth information indicates that the first terminal is out of coverage of the base station, then the synchronization source of the first terminal is the GNSS, and the synchronization source of the second terminal is the first terminal.

Taking the first synchronization mode being determined according to the fifth information as an example, the fifth information indicates that the first terminal is in coverage of the base station, then the synchronization source of the first terminal is the base station, and the synchronization source of the second terminal is the base station.

Taking the first synchronization mode being determined according to the second information as an example, the second information indicates that the first terminal establishes a PC5 interface with the second terminal, then the synchronization source of the first terminal is the second terminal, and the synchronization source of the second terminal is the base station.

Taking the first synchronization mode being determined according to the second information and the second information as an example, the second information indicates that the first terminal has the PC5 interface with the second terminal and the second information indicates that the first terminal is close to the base station, then the synchronization source of the first terminal is the base station, and the synchronization source of the second terminal is the first terminal.

In the embodiments of the disclosure, the information for determining the first synchronization mode may further include information such as priority of the synchronization source, etc. The embodiments of the disclosure do not impose any limitation on the information for determining the first synchronization mode.

In some embodiments, determination conditions of the first synchronization mode include at least one of a first condition, a second condition, a third condition or a fourth condition.

In the first condition, different terminals support different synchronization modes, and different synchronization modes correspond to different synchronization sources or use different interfaces.

In the second condition, the first terminal supports at least two scenarios, and different scenarios correspond to different synchronization sources or use different interfaces.

In the third condition, the first terminal supports at least two synchronization modes.

In the fourth condition, the first terminal supports at least two capabilities, and different capabilities correspond to different synchronization sources.

When the first terminal meets one or more of the above first to fourth conditions, the synchronization source of the first terminal is selected.

For the first condition, different terminals are different terminals in the same base station, or different terminals are different terminals in different base stations. In an example, the base station is a base station where the first terminal is located.

Interfaces used in the first condition and the second condition may include: an interface between the terminal and the GNSS, an interface between the terminal and the base station, and an interface between terminals.

The capabilities in fourth condition may include: GNSS capability and V2X capability.

In some embodiments, determination conditions of the third synchronization mode include at least one of the first condition, a fifth condition, a sixth condition or a seventh condition.

In the first condition, different terminals support different synchronization modes, and different synchronization modes correspond to different synchronization sources or use different interfaces.

In the fifth condition, the second terminal supports at least two scenarios, and different scenarios correspond to different synchronization sources or use different interfaces.

In the sixth condition, the second terminal supports at least two synchronization modes.

In the seventh condition, the second terminal supports at least two capabilities, and different capabilities correspond to different synchronization sources.

In the embodiments of the disclosure, descriptions of the eighth information to the fourteenth information of the second terminal may refer to descriptions of the first information to the seventh information of the first terminal. The descriptions are applicable to the above information, except different terminals to which the information belongs.

In an actual application, only the first synchronization mode indicating the first synchronization source and the second synchronization source may be determined; or, only the third synchronization mode indicating the first synchronization source and the second synchronization source may be determined; or, the first synchronization mode indicating the first synchronization source and the third synchronization mode indicating the second synchronization source are determined.

In the embodiments of the disclosure, descriptions of the fifth condition, the sixth condition and the seventh condition of the second terminal may refer to descriptions of the second condition, the third condition and the fourth condition of the first terminal respectively, which are not elaborated herein.

In some embodiments, the first synchronization mode is determined by a first device, and the first device is one of a core network device, a TSN device, a base station, the first terminal, the second terminal, or a fourth terminal with a control function.

In an example, the fourth terminal is a terminal that may control the synchronization source of the first terminal or the second terminal and is different from the first terminal and the second terminal.

The fourth terminal and the third terminal may be the same or different terminals.

The information may be indication information from other devices, or auxiliary information from other devices, or information determined or obtained by the device itself. In an example, the information determined or obtained by the device itself may involve interaction with other layers within the device, for example, the information or part of the information is indication/auxiliary information from other layers of the device; or, the information determined or obtained by the device itself may not involve interaction with other layers within the device.

In the embodiments of the disclosure, when the first device is the first terminal, the first terminal may directly determine the first synchronization mode, or determine the first synchronization mode based on auxiliary information sent by other devices, or determine the first synchronization mode based on indication information sent by other devices.

In an example, the first terminal determines the first synchronization mode according to the first information.

In an example, the first terminal determines the first synchronization mode according to the first information and the third information.

In an example, the first terminal determines the first synchronization mode according to the first information and the fourth information sent by the base station to the first terminal.

When the first device is a device other than the first terminal, the first device may indicate the first synchronization mode to the first terminal after determining the first synchronization mode.

In an example, the first device is a base station, and the base station determines the first synchronization mode according to the first information and the fifth information, and indicates the first synchronization mode to the first terminal.

In the embodiments of the disclosure, the first terminal and the second terminal may be located in the same or different base stations.

In the embodiments of the disclosure, the first terminal and the third terminal may be located in the same or different base stations.

When the first device is one of the core network device, the TSN device, the base station, the second terminal or the third terminal, the method further includes at least one of the following operations.

The first terminal receives first indication information sent by the first device, and the first indication information is configured to indicate the first synchronization mode.

Or, the first terminal receives second indication information sent by the first device, and the second indication information is configured to indicate whether the first terminal performs PDC.

In an example, the first terminal receives the first indication information sent by the base station, and determines the first synchronization mode according to the first indication information.

In an example, the first terminal receives the second indication information sent by the core network device, and determines whether to perform PDC according to the second indication information.

In an example, the first terminal receives the first indication information and the second indication information sent by the base station, determines the first synchronization mode according to the first indication information, and determines whether to perform PDC according to the second indication information.

In an example, the first terminal receives the first indication information sent by the second terminal and the second indication information sent by the third terminal, determines the first synchronization mode according to the first indication information, and determines whether to perform PDC according to the second indication information.

In the embodiments of the disclosure, when the first terminal receives the first indication information and the second indication information, the device sending the first indication information is the same as or different from the device sending the second indication information.

In the embodiments of the disclosure, the first indication information and the second indication information may be the same information, or may be different information.

In some embodiments, the third synchronization mode is determined by a first device, and the first device is one of a core network device, a TSN device, a base station, the first terminal, the second terminal, or a fourth terminal with a control function.

In the embodiments of the disclosure, the first device for determining the first synchronization mode and the first device for determining the third synchronization mode may be the same or different devices.

In some embodiments, when the first device is one of the core network device, the TSN device, the base station, the first terminal or the third terminal, the method further includes at least one of the following operations.

The second terminal receives fourth indication information sent by the first device, and the fifth indication information is configured to indicate the first synchronization mode.

Or, the second terminal receives fifth indication information sent by the first device, and the sixth indication information is configured to indicate whether the second terminal performs PDC.

In an example, the second terminal receives the fourth indication information sent by the base station, and determines the third synchronization mode according to the fourth indication information.

In an example, the second terminal receives the fifth indication information sent by the core network device, and determines whether to perform PDC according to the fifth indication information.

In an example, the second terminal receives the fourth indication information and the fifth indication information sent by the base station, determines the third synchronization mode according to the fourth indication information, and determines whether to perform PDC according to the fifth indication information.

In an example, the second terminal receives the fourth indication information sent by the first terminal and the fifth indication information sent by the fourth terminal, determines the third synchronization mode according to the fourth indication information, and determines whether to perform PDC according to the fifth indication information.

In the embodiments of the disclosure, when the second terminal receives the fourth indication information and the fifth indication information, the device for sending the fourth indication information is the same as or different from the device for sending the fifth indication information.

In the embodiments of the disclosure, the fourth indication information and the fifth indication information may be the same information, or may be different information.

In some embodiments, the operation that the first terminal performs synchronization of the first time includes the following operation.

The first terminal performs synchronization of the first time based on a second synchronization mode. The second synchronization mode is transmission of a first message or time synchronization based on the first message.

As illustrated in FIG. 12, transmission of the first message is performed between UE1 and UE2. UE1 sends the first message to UE2, and UE2 performs synchronization of the first time based on the received first message.

In an example, the first terminal is UE1 in FIG. 12. In such case, UE2 is the second terminal.

In some embodiments, the operation that the second terminal performs synchronization of the first time includes the following operation. The second terminal performs synchronization of the first time based on a second synchronization mode, and the second synchronization mode is transmission of a first message or time synchronization based on the first message.

As illustrated in FIG. 12, transmission of the first message is performed between UE1 and UE2. UE1 sends the first message to UE2, and UE2 performs synchronization of the first time based on the received first message.

In an example, the first terminal is UE1 in FIG. 12. In such case, UE2 is the second terminal.

In some embodiments, the first message is configured to: remove a gap between the first time and the second time; or determine a time required to pass through the first network; or determine the first time corresponding to a TSN end station or a TSN egress node.

In an example, the TSN egress node is the second terminal.

Here, local clocks of the first terminal and the second terminal use the same clock source, i.e., the clock source of the mobile network or GNSS. It may be considered that the local clocks of the first terminal and the second terminal are synchronous.

In an example, when the first terminal and the second terminal are synchronized at the second time, transmission of the first message is performed to perform synchronization of the first time.

Taking the first message removing the gap between the first time and the second time as an example, a clock frequency of a time base of the first time (i.e., the clock source of the TSN) is 1 MHz, and a clock frequency of a time base of the second time to which the first terminal is synchronized is 1.3 MHz. When the first terminal passes 2.6s based on the local clock and passes 2s based on the clock source of the TSN, a time difference between the current first time and the second time is 0.6s.

When the first message is configured to determine the time required to pass through the TSN node, the first message is configured to determine time required for passing through one or more TSN nodes in the first terminal and the second terminal. When the first terminal is a TSN node, the first message is configured to determine the time required to pass through the first terminal. When the second terminal is a TSN node, the first message is configured to determine the time required to pass through the second terminal. When the first terminal is a TSN node and the second terminal is a TSN node, the first message is configured to determine the time required to pass through the first terminal and the second terminal. The first message is configured to determine the time required to pass through the 5GS or a second time system.

When the first message enters the TSN node, an ingress time is recorded. When the first message is sent from the TSN node, an egress time is recorded. A time difference between the egress time and the ingress time is the time required for the first message to pass through the TSN node. Here, a time base of the time required to pass through the TSN may be the clock source of the TSN, or the clock source of the mobile network or GNSS.

When the first message is configured to determine the first time corresponding to the TSN end station, the first message determines the time of the TSN end station according to a time when the first message enters the TSN end station or a time when the first message leaves the TSN end station, and a latency corresponding to the first time required from the TSN end station to the current first terminal.

When the first message is configured to determine the first time corresponding to the TSN egress node, the first message determines the time of the TSN egress node according to a time when the first message leaves the TSN end station, and a latency corresponding to the first time required from the TSN end station to the TSN egress node.

In an example, the first terminal is the TSN egress node.

In some embodiments, the first terminal is a first DS-TT entity; or, the first terminal corresponds to the first DS-TT entity.

Taking the first terminal being the first DS-TT entity as an example, the first DS-TT entity performs synchronization of the first time with the second terminal.

In some embodiments, the second terminal is a second DS-TT entity. In such case, the first DS-TT entity performs synchronization of the first time with the second DS-TT entity.

Taking the second terminal corresponding to the second DS-TT entity as an example, the second terminal performs synchronization of the first time with the first terminal through the second DS-TT entity.

In an example, the first terminal corresponds to the first DS-TT entity, the second terminal corresponds to the second DS-TT entity, and the first terminal performs synchronization of the first time with the second DS-TT entity of the second terminal through the first DS-TT entity.

In an example, the first DS-TT entity sends the first message to the first terminal, the first terminal sends the first message to the second terminal based on the PC5 interface between the first terminal and the second terminal, and the second terminal sends the first message to the second DS-TT entity.

As illustrated in FIG. 13, the first terminal UE1 corresponds to a DS-TT entity 1301, and the second terminal UE2 corresponds to a DS-TT entity 1302.

In an example, the first DS-TT entity is integrated on the first terminal.

In an example, the second DS-TT entity is integrated on the second terminal.

In some embodiments, the first message carries at least one of correction information, clock frequency information, or a timestamp of a clock source of the TSN.

In an example, the timestamp of the clock source of the TSN is a timestamp when the GM of the TSN sends the first message. A local clock of the GM is the clock source of the TSN.

Before the first message is transmitted between the first terminal and the second terminal, the first message is generated by the GM and sent to a first end station connected to the GM, and sent to the first terminal from the first end station through one or more end stations.

The correction information is in a correction field and indicates a residence time, i.e., latency/delay, of the first message passing through each end station, and a link delay from one end station to another end station.

In an example, the correction information takes the first time as a time base.

The clock frequency information is in a clock frequency ratio (rateratio) field, and indicates a ratio between a frequency of the clock source of the TSN (i.e., the local clock of the GM) and a frequency of the local clock of the TSN end station passed currently. Here, the clock frequency information may be a cumulative rateratio.

In an example, the first message is sent by the GM to UE1, UE2, UE3 and UE4 in sequence. The rateratio in the first message sent by the GM to UE1 is 1. When UE1 receives the first message, UE1 modifies the rateratio to a ratio between a frequency of a local clock of the TSN and a frequency of a local clock of UE1, that is, $F_{GM}/F_{UE1}$, where $F_{GM}$ is the frequency of the local clock of the GM, and $F_{UE1}$ is the frequency of the local clock of UE1. When UE2 receives the first message, the cumulative rateratio carried by the first message is $F_{GM}/F_{UE1}$. When UE3 receives the first message, the cumulative rateratio carried by the first message is $F_{GM}/F_{UE2}$, and so on.

In an example, the first message is a gPTP message.

In some embodiments, the first message is an event message.

In an example, the first message is a synchronization (Sync) message.

In some embodiments, the second synchronization mode is determined by a second device, and the second device is one of a core network device, a TSN device, a base station, the first terminal, the second terminal, or a fourth terminal with a control function.

In an example, the first device is the same as or different from the second device.

In some embodiments, when the second device is one of the core network device, the TSN device, the base station, the second terminal or the fourth terminal, the method further includes the following operation.

The first terminal receives third indication information sent by the second device. The third indication information is configured to indicate the second synchronization mode.

The second device determines the third indication information and sends the third indication information to the first terminal, and the first terminal determines the second synchronization mode based on the third indication information.

In the embodiments of the disclosure, the first indication information, the second indication information and the third indication information may be sent together or separately. The first indication information, the second indication information and the third indication information may be sent by the same device, or by partially different devices, or by different devices.

In some embodiments, when the second device is one of the core network device, the TSN device, the base station, the second terminal or the fourth terminal, the method further includes the following operation.

The second terminal receives sixth indication information sent by the second device. The sixth indication information is configured to indicate the second synchronization mode.

The second device determines the sixth indication information and sends the sixth indication information to the second terminal, and the second terminal determines the second synchronization mode based on the sixth indication information.

In the embodiments of the disclosure, the fourth indication information, the fifth indication information and the sixth indication information may be sent together or separately. The fourth indication information, the fifth indication information and the sixth indication information may be sent by the same device, or by partially different devices, or by different devices.

The operation that the first terminal and the second terminal perform synchronization of the first time based on the second synchronization mode includes at least one of the following operations.

The first terminal receives the first message sent by a fifth terminal.

The first terminal generates a first timestamp. In an example, the first timestamp indicates a time when the first terminal receives the first message.

The first terminal adds the first timestamp to the first message. In an example, the first timestamp corresponds to a second time, that is, the first timestamp takes a clock source of the mobile network or GNSS or the synchronization reference terminal of the first terminal as a time base.

Here, the clock source of the synchronization reference terminal of the first terminal is the clock source of the mobile network or GNSS, then the time base of the first terminal is the clock source of the mobile network or GNSS.

In an example, the first terminal is synchronized with the synchronization reference terminal, and the synchronization reference terminal is synchronized with the base station or GNSS, to achieve synchronization between the first terminal and the base station or GNSS.

In an example, the first terminal receives the first message from the fourth terminal, and records a time when the first message is received, i.e., the first timestamp, after receiving the first message. The first timestamp is an ingress time when the first message enters the first terminal or the first network including the first terminal and the second terminal.

In an example, the first terminal keeps synchronized with the second terminal based on the second time, then the time base of the first timestamp is the same as the time base of the second time.

In an example, the first terminal adds the first timestamp to the first message. In an example, the first terminal adds the first timestamp to a suffix field of the first message.

In an example, the first message received by the first terminal carries a third latency experienced in transmission of the first message from the GM to the fifth terminal. In an example, a time base of the third latency is the clock source of the TSN.

In an example, the first terminal determines a link delay required to send the first message from the fifth terminal to the first terminal based on the cumulative rateratio carried in the first message. The determined link delay corresponds to the first time.

In an example, the link delay may be calculated based on formula (1):

$$\text{link delay2} = \text{link delay1} * \text{cumulative rateRatio} \qquad (1)$$

Here, a time base of link delay 1 is the same as a time base of the fifth terminal, cumulative rateRatio is clock frequency ratio information carried in the first message, cumulative rateRatiolink carried in the first message is a ratio of the clock frequency of the clock source of the TSN (i.e., a clock frequency of the GM) to a frequency of a local clock of the fifth terminal, and link delay2 corresponds to the first time.

In some embodiments, the first timestamp is configured to determine at least one of: a residence time of the first message in the first network that at least includes the first terminal and the second terminal; a time when the first message enters the first network; a time when the first message enters a TSN end station; or a time when the first message enters the TSN ingress node.

In an example, the first network is composed of the first terminal and the second terminal.

In an example, the first network is composed of the first terminal, the second terminal, and other terminals located between the first terminal and the second terminal.

In some embodiments, the operation that the first terminal performs synchronization of the first time with the second terminal based on the second synchronization mode further includes the following operation.

The first terminal sends the first message to the second terminal.

As illustrated in FIG. 12, the first terminal is UE1, the second terminal is UE2, and UE1 sends the first message to UE2.

In an example, the first DS-TT entity sends the first message to the first terminal, and the first terminal sends the first message to the second terminal.

In an example, the first terminal updates the clock frequency information carried in the first message.

The clock frequency ratio in the first message received by the first terminal may be a ratio of a clock frequency of a clock source of a TSB to a clock frequency of a local clock of the fourth terminal.

In an example, the first terminal determines a new clock frequency ratio based on the clock frequency ratio (cumulative rateRatio1) carried in the first message and a clock frequency ratio (neighborRateRatio) of a neighboring node. Here, the new clock frequency ratio (cumulative rateRatio2) may be calculated by formula (1):

$$\text{cumulative rateRatio2} = \text{cumulative rateRatio1} * \text{neighborRateRatio} \qquad (2)$$

Here, cumulative rateRatio2 is a ratio of the clock frequency of the second time of UE1 to the clock frequency of the first time, and neighborRateRatio is a ratio of the clock frequency of the local clock of the fourth terminal to the clock frequency of the local clock of the first terminal, i.e., the clock frequency of the second time.

In an example, neighborRateRatio may be calculated by formula (3):

$$\text{neighborRateRatio} = \text{frequency1/frequency2} \qquad (3)$$

frequency1 is the clock frequency of the local clock of the fourth terminal, and frequency2 is the clock frequency of the local clock of the first terminal.

In some embodiments, the operation that the second terminal performs synchronization of the first time based on the second synchronization mode includes at least one of the following operations.

The second terminal receives the first message sent by the first terminal, and the first message carries a first timestamp.

The second terminal generates a second timestamp, and the second timestamp indicates a time when the second terminal receives the first message.

The second terminal determines a first residence time based on the first timestamp and the second timestamp, and the first residence time is a time when the first message resides in the first network.

The second terminal receives the first message carrying the first timestamp from the first terminal. The first timestamp is a time when the first terminal receives the first message.

The second terminal determines the second timestamp based on the local clock. A time base of the local clock is the clock source of the mobile network or GNSS or the synchronization reference terminal. That is, the second timestamp is a timestamp corresponding to the second time.

The second terminal determines the time when the first message resides in the first network, i.e., the first residence time (residence time1), based on the first timestamp and the second timestamp. The first timestamp is an ingress timestamp when the first message enters the first network, and the second timestamp is an egress timestamp when the first message is sent from the first network.

In an example, a time base of the first residence time is the same as the time base of the second time, that is, the first residence time is a length of time when the first message resides in the first network based on the second time.

In some embodiments, the first message carries a first clock frequency ratio. The first clock frequency ratio is a ratio of a first clock frequency to a second clock frequency, the first clock frequency is a clock frequency corresponding to the first time, and the second clock frequency is a clock frequency corresponding to the second time. The operation that the second terminal performs synchronization of the first time based on the second synchronization mode further includes the following operation.

The second terminal determines a second residence time based on the first residence time and the first clock frequency ratio.

In some embodiments, the second residence time is a time period based on the TSN, and/or, the first residence time is a time period based on the mobile network or GNSS.

In an example, a time base of the second residence time is the same as the time base of the first time.

In an example, the time base of the first residence time is the same as the time base of the second time.

The second residence time (residence time2) may be determined by formula (4):

$$\text{residence time2} = \text{residence time1} * \text{cumulative rateRatio} \qquad (4)$$

where cumulative rateRatio is the first clock frequency ratio carried in the first message.

In some embodiments, the second terminal further performs at least one of the following operations.

The second terminal adds the first residence time to the first message.

The second terminal adds the second residence time to the first message.

The second terminal deletes the second timestamp from the first message.

The second terminal sends the first message to a sixth terminal.

In an example, the first DS-TT entity sends the first message to the first terminal, the first terminal sends the first message to the second terminal, and the second terminal sends the first message to the second DS-TT entity.

The time synchronization method according to the embodiments of the disclosure will be further described below with a specific scenario where the first terminal is UE1, the second terminal is UE2, and the first message is the gPTP message.

First example: accurate TSN time synchronization when UE is used as a TSN end station/node, and the UE has GNSS capability or the UE is synchronized with the GNSS.

The time synchronization method according to the first example is implemented as follows.

    1. UE used as a TSN node is synchronized with a GNSS clock. In an example:

        (1) UE1 and UE2 are directly synchronized with the GNSS clock.
        (2) Synchronization of the GNSS clock is performed between UE1 and UE2 through the PC5 interface, using the existing V2X technology. For example, UE1 is synchronized with the GNSS, and UE2 is synchronized with UE1.
        (3) The PDC mechanism is not required.

    2. UE1 is connected to DS-TT1, and UE2 is connected to DS-TT2. The gPTP message, such as gPTP event (synchronization) information, is transmitted between UE1 and UE2. The gPTP message is configured to remove a gap between a TSC clock and a 5G internal clock or a gap between the TSC clock and the GNSS clock. For example, assuming that UE1 is used as UE of TSC GM clock, UE1 sends clock information, i.e., the gPTP message such as the gPTP event (synchronization) information, to UE2.

        (1) The gPTP message, i.e., the gPTP event information includes fields: timestamp of the TSN GM clock, correction, and clock frequency ratio (rateratio).

(2) DS-TT1 of UE1 generates an ingress timestamping (recorded as TSi) for each gPTP event (synchronization) information when receiving the gPTP message, and adds TSi to a suffix field of a gPTP package.

(3) DS-TT1 of UE1 uses a cumulative clock frequency ratio (cumulative rateratio) carried in a gPTP message payload to calculate a link delay from an upper-level TSN node to UE DS-TT1. Here, the link delay (link delay2) from the upper-level TSN node to UE DS-TT1 may be calculated by formula (1):

$$\text{link delay2} = \text{link delay1} * \text{cumulative rateRatio} \qquad (1)$$

where link delay 1 is a link delay with a frequency of a local clock of a previous TSN node as a time base (Timebase), cumulative rateRatio is cumulative rateRatio in the gPTP message payload, cumulative rateRatiolink in the payload is a ratio of a frequency of a master clock to a frequency of a local clock of a previous node, and delay2 is a link delay with the master clock as a time base.

DS-TT1 of UE1 adds the calculated link delay2 to the correction field.

(4) DS-TT1 of UE1 replaces cumulative rateRatio in the payload with a new cumulative rateratio. The new cumulative rateRatio, i.e., cumulative rateRatio2, may be calculated by formula (2):

$$\text{cumulative rateRatio2} = \text{cumulative rateRatio1} * \text{neighborRateRatio} \qquad (2)$$

where cumulative rateRatio2 is a ratio of a clock frequency of the local clock of UE1 to a clock frequency of the master clock, and neighborRateRatio is a ratio of the frequency of the local clock of the previous TSN node to the clock frequency of the local clock.

neighborRateRatio may be calculated by formula (3):

$$\text{neighborRateRatio} = \text{frequency1}/\text{frequency2} \qquad (3)$$

frequency1, i.e., the first frequency is the frequency of the local clock of the previous TSN node, and frequency2 is a clock frequency of a local clock of the current node.

(5) DS-TT1 of UE1 (UE1 DS-TT1) sends the gPTP message to UE1, and UE1 transmits the gPTP message to UE2 through the PC5 interface between UE1 and UE2 using the PSSCH. UE2 provides the received gPTP message to DS-TT2 of UE2 (UE2 DS-TT2).

(6) DS-TT2 generates an egress timestamping (recorded as TSe) based on the received gPTP message. Correspondingly, a residence time of the gPTP message in the 5GS, i.e., the second residence time (resident time2) is TSe - TSi.

(7) UE2 DS-TT2 uses cumulative rateRatio in the gPTP payload and converts residence time1 of the gPTP message in the 5GS through formula (4), to obtain a residence time of the gPTP message in the 5GS that corresponds to the TSN network, i.e., the second residence time (resident time2), and resident time2 may be calculated by formula (4):

$$\text{resident time2} = \text{residence time1} * \text{cumulative rateRatio} \qquad (4).$$

(8) UE2 DS-TT2 adds the calculated residence time2 to correction.

(9) UE2 DS-TT2 deletes TSi.

(10) UE2 DS-TT2 trasmits the gPTP message to a next TSN node.

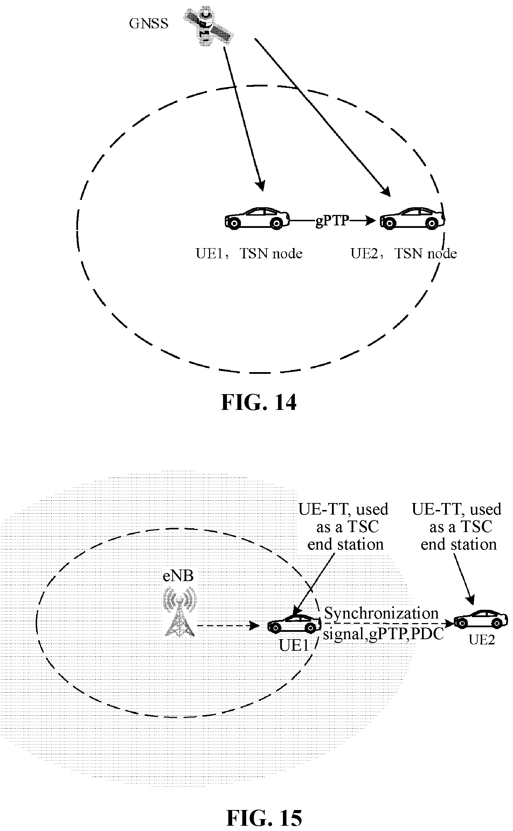

In an example, as illustrated in FIG. 14, UE1 and UE2 are used as TSN nodes respectively to perform synchronization of the GNSS clock with the GNSS, and UE1 sends the gPTP message to UE2 to perform synchronization of the TSN clock.

The time synchronization method according to the first example uses the gPTP message mechanism to ensure accurate synchronization of the TSN clock between UEs and between UE and the TSN network, and ensure accurate transmission requirements of TSC services.

Second example: accurate TSN time synchronization when UE is used as a TSN node/end station and at least one UE does not have the GNSS clock.

1. UE used as the TSN node performs synchronization within the 5GS. In an example:

(1) Synchronization within the 5GS is performed between UEs through the PC5 interface. For example, UE1 is synchronized with the gNB and UE2 is synchronized with UE1 by using the existing V2X technology.

1) Correspondingly, PDC is performed between UE1 and the gNB, and PDC is performed between UE1 and UE2.
2) PDC may be TA-based PDC, RTT-based PDC, or other PDC mechanisms.

Or, (2) UE1 is synchronized with the GNSS and UE2 is synchronized with UE1 by using the existing V2X technology.

1) PDC is performed between UE1 and UE2.
2) PDC may be TA-based PDC, RTT-based PDC, or other PDC mechanisms.

Or, (3) Synchronization within the 5GS is performed between UEs through the Uu interface. For example, UE1 is synchronized with the gNB, and UE2 is synchronized with the gNB.

1) Correspondingly, PDC is performed between UE1 and the gNB, and PDC is performed between UE2 and the gNB.
2) PDC may be TA-based PDC, RTT-based PDC, or other PDC mechanisms.

2. UE1 is connected to DS-TT1, and UE2 is connected to DS-TT2. The gPTP message such as gPTP event (synchronization) information is transmitted between UE1 and UE2. The gPTP message is configured to remove a gap between a TSC clock and a 5G internal clock or a gap between the TSC clock and the GNSS clock. For example, assuming that UE1 is used as UE of TSC GM clock, UE1 sends clock information, i.e., the gPTP message such as the gPTP event (synchronization) information, to UE2.

(1) The gPTP message, i.e., the gPTP event information includes fields: timestamp of the TSN GM clock, correction, and clock frequency ratio (rateratio).
(2) DS-TT1 of UE1 generates an ingress timestamping (recorded as TSi) for each gPTP event (synchronization) information when receiving the gPTP message, and adds TSi to a suffix field of a gPTP package.
(3) DS-TT1 of UE1 uses a cumulative clock frequency ratio (cumulative rateRatio) carried in a gPTP message payload to calculate a link delay from an upper-level TSN node to UE DS-TT1. Here, the link delay (link delay2) from the upper-level TSN node to UE DS-TT1 may be calculated by formula (1):

$$\text{link delay2} = \text{link delay1} * \text{cumulative rateRatio} \qquad (1)$$

where link delay1 is a link delay with a frequency of a local clock of a previous TSN node as a time base (Timebase), cumulative rateRatio is cumulative rateRatio in the gPTP message payload, cumulative rateRatiolink in the payload is a ratio of a frequency of a master clock to a frequency of a local clock of a previous node, and delay2 is a link delay with the master clock as a time base.
DS-TT1 of UE1 adds the calculated link delay2 to the correction field.

(4) DS-TT1 of UE1 replaces cumulative rateRatio in the payload with a new cumulative rateratio. The new cumulative rateRatio may be calculated by formula (2):

$$\text{cumulative rateRatio2} = \text{cumulative rateRatio1} * \text{neighborRateRatio} \qquad (2)$$

where cumulative rateRatio2 is a ratio of the clock frequency of the local clock of UE1 to a clock frequency of the master clock, and neighborRateRatio is a ratio of the frequency of the local clock of the previous TSN node to the clock frequency of the local clock.
neighborRateRatio may be calculated by formula (3):

$$\text{neighborRateRatio} = \text{frequency1}/\text{frequency2} \qquad (3)$$

frequency1, i.e., the first frequency is the frequency of the local clock of the previous TSN node, and frequency2 is a clock frequency of a local clock of the current node.

(5) DS-TT1 of UE1 (UE1 DS-TT1) sends the gPTP message to UE1, and UE1 transmits the gPTP message to UE2 through the PC5 interface between UE1 and UE2 using the PSSCH. UE2 provides the received gPTP message to DS-TT2 of UE2 (UE2 DS-TT2).

(6) DS-TT2 generates an egress timestamping (recorded as TSe) based on the received gPTP message. Correspondingly, a residence time of the gPTP message in the 5GS, i.e., the second residence time (resident time2) is TSe - TSi.

(7) UE2 DS-TT2 uses cumulative rateRatio in the gPTP payload and converts residence time2 of the gPTP message in the 5GS through formula (4), to calculate a residence time of resident time2 corresponding to the TSN network, i.e., the first residence time:

$$\text{resident time1} = \text{residence time2} * \text{cumulative rateRatio} \qquad (4).$$

(8) UE2 DS-TT2 adds the calculated residence time2 to correction.

(9) UE2 DS-TT2 deletes TSi.

(10) UE2 DS-TT2 trasmits the gPTP message to a next TSN node.

In an example, as illustrated in FIG. 15, UE1 and UE2 are used as TSN end stations respectively, UE1 is synchronized with the base station (eNB), UE1 sends synchronization information to UE2 to perform synchronization between UE1 and UE2, and PDC is performed between UE1 and UE2 to achieve time synchronization between UE1 and UE2 within the 5GS. As illustrated in FIG. 15, UE1 sends the gPTP message to UE2 to perform synchronization of the TSN clock.

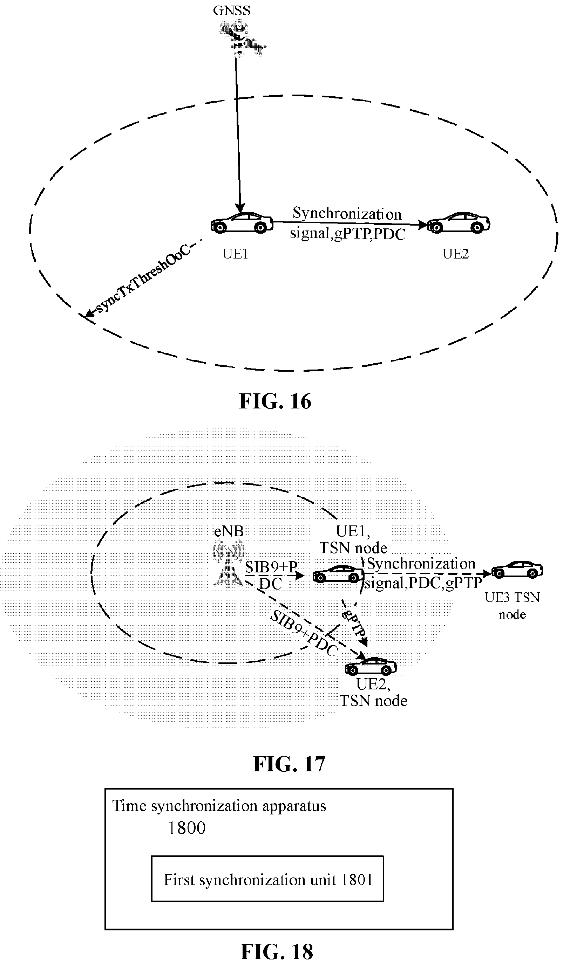

In an example, as illustrated in FIG. 16, a GNSS signal of UE1 is greater than a GNSS signal threshold (syncTxThreshOoC), that is, UE1 is in coverage of the GNSS, UE1 is synchronized with the GNSS, and UE2 sends synchronization information to UE1, so that UE2 is synchronized with UE1, and PDC is performed between UE1 and UE2 to achieve time synchronization between UE1 and UE2 within the 5GS. As illustrated in FIG. 16, UE1 sends the gPTP message to UE2 to perform synchronization of the TSN clock.

Compared to the first example, in the second example, when the UE cannot be directly synchronized to the GNSS clock, the UE uses internal synchronization of the 5GS, and correspondingly, needs to perform PDC to ensure accurate time synchronization of the 5GS, and further ensure high accurate time synchronization requirements of the TSN system.

Third example

When multiple synchronization modes coexist, or when multiple synchronization modes may coexist in a base station, a used synchronization mode is determined.

1. When multiple synchronization modes coexist in one gNB, or when UE supports multiple scenarios (such as establishing PSSCH and establishing a Uu empty link, or supporting Uu transmission, PC5 transmission or other transmissions, or supporting a control-to-control scenario (a communication scenario between UE1 and an end station as illustrated in FIG. 5 and being a V2X UE), or the UE has multiple capabilities (supporting Uu and V2X links, supporting synchronization with a network/GNSS/UE, etc.), if there is a UE used as a TSN node/end station, the first entity determines a synchronization mode used by the UE, which may include at least one of the following aspects.

a) The first entity is a core network device (SMF, AMF or UPF), or a TSN device (such as CNC), or a base station, or the UE itself, or other UEs provided a PC5 interface with the UE.

b) The first entity determines which synchronization mode is used according to at least one of the following information: UE capabilities (UE supporting SL, UE supporting V2X, UE having GNSS capability), whether the UE is provided with the PC5 interface or establishes a PSSCH connection with another UE, a position relationship between the UE and the gNB (such as a RSPR value), whether the UE is in coverage of the GNSS, or whether the UE is out-of-coverage.

1) For example, out-of-coverage UE performs synchronization between UEs using a V2X mechanism.

2) For example, out-of-coverage and GNSS-capable UE with a GNSS signal strength meeting a threshold may perform synchronization between UE and the GNSS.

3) For example, GNSS-capable UE with a GNSS signal strength meeting a threshold may perform synchronization between UE and the GNSS.

4) For example, in-coverage UE performs synchronization between UE and the gNB.

c) The synchronization modes include at least one of synchronization with the gNB, synchronization with the GNSS, or synchronization with UE.

1) In the case of synchronization with the gNB, PDC needs to be performed between UE and the gNB.

2) In the case of synchronization with UE, PDC needs to be performed between the synchronized UEs.

d) The synchronization modes further include transmitting the gPTP message between TSN end stations and/or performing synchronization of the TSN clock.

e) In an example, synchronization modes of UEs in the same gNB are the same or different.

1) Synchronization modes of UEs in coverage of the gNB are the same or different.

2. The first entity indicates the determined synchronization mode to the UE.

a) Explicit mode: using an explicit synchronization mode for indicating signaling.

b) Implicit mode: depending on whether synchronization information between UEs is sent.

3. The UE performs time synchronization according to the determined synchronization mode.

A process of performing time synchronization refers to existing protocols or the above two examples.

As illustrated in FIG. 17, the eNB sends SIB9 to UE1 and UE2 respectively, so that UE1 is synchronized with the eNB, UE2 is synchronized with the eNB, PDC is performed between UE1 and the eNB, PDC is performed between UE2 and the eNB; UE2 sends synchronization information to UE3, and PDC is performed between UE3 and UE1, so that UE1 is synchronized with the eNB, UE3 is synchronized with UE1, and UE2 is synchronized with the eNB, to achieve time synchronization of UE1 with UE2 and UE3 within the 5GS. As illustrated in FIG. 17, UE1 sends the gPTP message to UE2 and UE3 respectively to perform synchronization of the TSN clock.

The third example provides a method for determining the synchronization mode used by UE in the case of supporting multiple synchronization modes, to ensure synchronization performance.

The preferred embodiments of the disclosure have been described in detail as above with reference to the drawings. However, the disclosure is not limited to specific details in the above embodiments. Various simple variations may be made to the technical solutions of the disclosure within the technical conception of the disclosure and shall fall within the scope of protection of the disclosure. For example, the various specific technical features described in the above embodiments may be combined in any suitable way without conflict, and the various possible combinations are not described separately in order to avoid unnecessary repetition. For example, the various embodiments of the disclosure may also be combined in any manner without departing from the concept of the disclosure and the resulting technical solutions shall also fall within the scope of protection of the disclosure. For another example, the various embodiments and/or the technical features of the various embodiments in the disclosure may be combined with the related art in any manner without conflict, and the resulting technical solutions shall also fall within the scope of protection of the disclosure

It is also to be understood that in various method embodiments of the disclosure, a magnitude of a sequence number of each process does not mean an execution sequence and the execution sequence of each process should be determined by its function and an internal logic and should not form any limit to an implementation process of the embodiments of the disclosure. Furthermore, in the embodiments of the disclosure, the terms "downlink", "uplink" and "sidelink" are used to indicate a direction of transmission of signals or data, "downlink" is used to indicate that the signal or data is transmitted in a first direction from a station to a UE of a cell, "uplink" is used to indicate that the signal or data is transmitted in a second direction from a UE of a cell to a station, and "sidelink" is used to indicate that the signal or data is transmitted in a third direction from UE 1 to UE 2. For example, "downlink signal" indicates that the signal is transmitted in the first direction. Further, in the embodiments of the disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the disclosure usually represents that previous and next associated objects form an "or" relationship.

FIG. 18 is a first schematic diagram of structural composition of a time synchronization apparatus according to an embodiment of the disclosure. The time synchronization apparatus is applied to a first terminal. As illustrated in FIG. 18, the time synchronization apparatus 1800 includes a first synchronization unit 1801.

The first synchronization unit 1801 is configured to perform synchronization of a first time. The first time is a time based on a TSN, and the first terminal is a TSN ingress node of a first network.

In some embodiments, the apparatus 1800 further includes a second synchronization unit.

The second synchronization unit is configured to perform synchronization of a second time. The second time is a time based on a mobile network or a GNSS.

In some embodiments, the second time is configured to: determine the first time; or determine a first delay required for a message or packet to pass through the first network, the delay corresponding to the first time; or determine a second delay required for the message or packet to pass through the first network, the second delay corresponding to the second time.

In some embodiments, the first synchronization unit is further configured to perform synchronization of the second time based on a first synchronization mode. The first synchronization mode is configured to indicate a first synchronization source, and the first synchronization source is a synchronization source of the first terminal.

In some embodiments, the first synchronization mode is further configured to indicate a second synchronization source. The second synchronization source is a synchronization source of a second terminal, and the second terminal is a TSN egress node of the first network.

In some embodiments, the first synchronization source is one of a base station, the GNSS, a second terminal, or a third terminal.

In some embodiments, the first synchronization source is the GNSS, and the first terminal has GNSS capability.

In some embodiments, the first terminal does not need to perform PDC with the first synchronization source when the first synchronization source is the GNSS.

In some embodiments, the first terminal performs PDC with the first synchronization source when the first synchronization source is the base station or the second terminal or the third terminal.

In some embodiments, the first synchronization mode is based on at least one of first information, second information, third information, fourth information, fifth information, sixth information or seventh information.

The first information is configured to indicate whether the first terminal supports SL, V2X or GNSS.

The second information is configured to indicate whether the first terminal establishes a connection with a second terminal.

The third information is configured to indicate a position relationship between the first terminal and a base station.

The fourth information is configured to indicate whether the first terminal is in coverage of the GNSS.

The fifth information is configured to indicate whether the first terminal is in coverage of the base station.

The sixth information is configured to indicate a TSN end station.

The seventh information is configured to indicate whether a service is a TSN service or a time sensitive service.

In some embodiments, determination conditions of the first synchronization mode include at least one of: different terminals supporting different synchronization modes, and different synchronization modes corresponding to different synchronization sources or using different interfaces; the first terminal supporting at least two scenarios, and different scenarios corresponding to different synchronization sources or using different interfaces; the first terminal supporting at least two synchronization modes; or the first terminal supporting at least two capabilities, and different capabilities corresponding to different synchronization sources.

In some embodiments, the first synchronization mode is determined by a first device, and the first device is one of a core network device, a TSN device, a base station, the first terminal, the second terminal, or a fourth terminal with a control function.

In some embodiments, when the first device is one of the core network device, the TSN device, the base station, the second terminal or the fourth terminal, the apparatus 1800 further includes a first receiving unit.

The first receiving unit is configured to: receive first indication information sent by the first device, the first indication information indicating the first synchronization mode; or, receive second indication information sent by the first device, the second indication information indicating whether the first terminal performs PDC.

In some embodiments, the first synchronization unit is further configured to perform synchronization of the first time based on a second synchronization mode. The second synchronization mode is transmission of a first message or time synchronization based on the first message.

In some embodiments, the first message is configured to: remove a gap between the first time and the second time; or, determine a time required to pass through the first network; or, determine the first time corresponding to a TSN end station or a TSN egress node.

In some embodiments, the first terminal is a first DS-TT entity; or, the first terminal corresponds to the first DS-TT entity.

In some embodiments, the first message carries at least one of a timestamp of a clock source of the TSN, correction information, or clock frequency information.

In some embodiments, the first message is an event message.

In some embodiments, the second synchronization mode is determined by a second device, and the second device is one of a core network device, a TSN device, a base station, the first terminal, the second terminal, or a fourth terminal with a control function.

In some embodiments, when the second device is one of the core network device, the TSN device, the base station, the second terminal or the fourth terminal, the apparatus 1800 further includes a second receiving unit.

The second receiving unit is configured to receive third indication information sent by the second device. The third indication information is configured to indicate the second synchronization mode.

In some embodiments, the first synchronization unit 1801 is further configured to perform at least one of: receiving the first message sent by a fifth terminal; generating a first timestamp, the first timestamp indicating a time when the first terminal receives the first message; or adding the first timestamp to the first message, the first timestamp corresponding to a second time.

In some embodiments, the first timestamp is configured to determine at least one of: a residence time of the first message in the first network; a time when the first message enters the first network; a time when the first message enters a TSN end station; or a time when the first message enters the TSN ingress node.

In some embodiments, the first synchronization unit 1801 is further configured to send the first message to the second terminal.

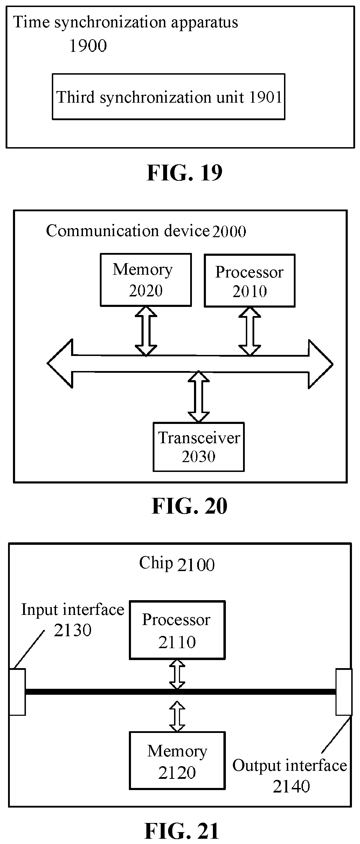

FIG. 19 is a second schematic diagram of structural composition of a time synchronization apparatus according to an embodiment of the disclosure. The time synchronization apparatus is applied to a second terminal. As illustrated in FIG. 19, the time synchronization apparatus 1900 includes a third synchronization unit 1901.

The third synchronization unit 1901 is configured to perform synchronization of a first time. The first time is a time based on a TSN, and the second terminal is a TSN egress node of a first network.

In some embodiments, the apparatus 1900 further includes a fourth synchronization unit.

The fourth synchronization unit is configured to perform synchronization of a second time. The second time is a time based on a mobile network or a GNSS.

In some embodiments, the second time is configured to: determine the first time; or, determine a first delay required for a message or packet to pass through the first network, the delay corresponding to the first time; or, determine a second delay required for the message or packet to pass through the first network, the second delay corresponding to the second time.

In some embodiments, the fourth synchronization unit is further configured to perform synchronization of the second time based on a third synchronization mode. The third synchronization mode is configured to indicate a second synchronization source, and the second synchronization source is a synchronization source of the second terminal.

In some embodiments, the third synchronization mode is further configured to indicate a first synchronization source. The first synchronization source is a synchronization source of a first terminal, and the first terminal is a TSN ingress node of the first network.

In some embodiments, the second synchronization source is one of a base station, the GNSS, a first terminal, or a third terminal.

In some embodiments, the second synchronization source is the GNSS, and the second terminal has GNSS capability.

In some embodiments, the second terminal does not need to perform PDC with the second synchronization source when the second synchronization source is the GNSS.

In some embodiments, the second terminal performs PDC with the second synchronization source when the second synchronization source is the base station or the first terminal or the third terminal.

In some embodiments, the third synchronization mode is based on at least one of eighth information, ninth information, tenth information, eleventh information, twelfth information, thirteenth information, or fourteenth information.

The eighth information is configured to indicate whether the second terminal supports SL, V2X or the GNSS.

The ninth information is configured to indicate whether the second terminal establishes a connection with a first terminal.

The tenth information is configured to indicate a position relationship between the second terminal and a base station.

The eleventh information is configured to indicate whether the second terminal is in coverage of the GNSS.

The twelfth information is configured to indicate whether the second terminal is in coverage of the base station.

The thirteenth information is configured to indicate a TSN end station.

The fourteenth information is configured to indicate whether a service is a TSN service or a time sensitive service.

In some embodiments, determination conditions of the third synchronization mode include at least one of: different terminals supporting different synchronization modes, and different synchronization modes corresponding to different synchronization sources or using different interfaces; the second terminal supporting at least two scenarios, and different scenarios corresponding to different synchronization sources or using different interfaces; the second terminal supporting at least two synchronization modes; or the second terminal supporting at least two capabilities, and different capabilities corresponding to different synchronization sources.

In some embodiments, the third synchronization mode is determined by a first device, and the first device is one of a core network device, a TSN device, a base station, the first terminal, the second terminal, or a fourth terminal with a control function.

In some embodiments, the apparatus 1900 further includes a third receiving unit.

The third receiving unit is configured to receive fourth indication information sent by the first device. The fourth indication information is configured to indicate the first synchronization mode.

The second terminal receives fifth indication information sent by the first device. The fifth indication information is configured to indicate whether the second terminal performs PDC.

The first device is one of the core network device, the TSN device, the base station, the first terminal or the fourth terminal.

In some embodiments, the third synchronization unit is further configured to perform synchronization of the first time based on a second synchronization mode. The second synchronization mode is transmission of a first message or time synchronization based on the first message.

In some embodiments, the first message is configured to: remove a gap between the first time and the second time; or, determine a time required to pass through the first network; or, determine the first time corresponding to a TSN end station or the second terminal.

In some embodiments, the second terminal is a second DS-TT entity; or, the second terminal corresponds to the second DS-TT entity.

In some embodiments, the first message carries at least one of a timestamp of a clock source of the TSN, correction information, or clock frequency information.

In some embodiments, the first message is an event message.

In some embodiments, the second synchronization mode is determined by a second device, and the second device is one of a core network device, a TSN device, a base station, the first terminal, the second terminal, or a fourth terminal with a control function.

In some embodiments, the apparatus 1900 further includes a fourth receiving unit. The fourth receiving unit is configured to receive sixth indication information sent by the second device. The sixth indication information is configured to indicate the second synchronization mode, and the second device is one of the core network device, the TSN device, the base station, the second terminal or the fourth terminal.

In some embodiments, the third synchronization unit 1901 is further configured to perform at least one of: receiving, by the second terminal, the first message sent by the first terminal, the first message carrying a first timestamp; generating, by the second terminal, a second timestamp, the second timestamp indicating a time when the second terminal receives the first message; or, determining, by the second terminal, a first residence time based on the first timestamp and the second timestamp, the first residence time being a residence time of the first message in the first network.

In some embodiments, the first synchronization unit 1801 is further configured to: determine a second residence time based on the first residence time and the first clock frequency ratio carried in the first message. The time base of the first residence time is the same as the time base of the first time. The first clock frequency ratio is a ratio of the first clock frequency to the second clock frequency, and the first clock frequency is a clock frequency corresponding to the first time.

In some embodiments, the second residence time is a time period based on the TSN, and/or, the first residence time is a time period based on a mobile network or GNSS.

In some embodiments, the apparatus 1900 further includes at least one of a first adding unit, a second adding unit, a deletion unit, or a transmission unit.

The first adding unit is configured to add the first residence time to the first message.

The second adding unit is configured to add a second residence time to the first message. The second residence time is a residence time of the first message in the first network, and the second residence time is a time period based on the TSN.

The deletion unit is configured to delete the second timestamp from the first message.

The transmission unit is configured to send the first message to a sixth terminal.

Those skilled in the art should understand that relevant descriptions of the above time synchronization apparatus according to the embodiments of the disclosure may be understood with reference to relevant descriptions of the time synchronization method according to the embodiments of the disclosure.

FIG. 20 is a schematic structural diagram of a communication device 2000 according to an embodiment of the disclosure. The communication device may be a terminal device (the first terminal or the second device). The communication device 2000 illustrated in FIG. 20 includes a processor 1910. The processor 2010 may call and run a computer program from a memory to implement the methods in the embodiments of the disclosure.

In an example, as illustrated in FIG. 20, the communication device 2000 may further include a memory 2020.

The processor 2010 may call and run the computer program from the memory 2020 to implement the methods in the embodiments of the disclosure.

The memory 2020 may be a separate device independent of the processor 2010, or may be integrated into the processor 2010.

In an example, as illustrated in FIG. 20, the communication device 2000 may further include a transceiver 2030. The processor 2010 may control the transceiver 2030 to communicate with other devices. Specifically, the transceiver 2030 may send information or data to other devices, or receive information or data sent by other devices.

The transceiver 2030 may include a transmitter and a receiver. The transceiver 2030 may further include one or more antennas.

In an example, the communication device 2000 may be specifically the mobile terminal/terminal device according to the embodiments of the disclosure, and the communication device 2000 may implement corresponding processes in each method according to the embodiments of the disclosure implemented by the mobile terminal/terminal device, which are not elaborated here for brevity.

FIG. 21 is a schematic structural diagram of a chip according to an embodiment of the disclosure. The chip 2100 illustrated in FIG. 21 includes a processor 2110. The processor 2110 may call and run a computer program from a memory to implement the methods in the embodiments of the disclosure.

In an example, as illustrated in FIG. 21, the chip 2100 may further include a memory 2120. The processor 2110 may call and run the computer program from the memory 2120 to implement the methods in the embodiments of the disclosure.

The memory 2120 may be a separate device independent of the processor 2110, or may be integrated into the processor 2110.

In an example, the chip 2100 may further include an input interface 2130. The processor 2110 may control the input interface 2130 to communicate with other devices or chips, and specifically, may acquire information or data sent by other devices or chips.

In an example, the chip 2100 may further include an output interface 2140. The processor 2110 may control the output interface 2140 to communicate with other devices or chips, and specifically, may output information or data to other devices or chips.

In an example, the chip may be applied to the mobile terminal/terminal device according to the embodiments of the disclosure, and the chip may implement corresponding processes in each method according to the embodiments of the disclosure implemented by the mobile terminal/terminal device, which are not elaborated here for brevity.

It should be understood that the chip mentioned in the embodiments of the disclosure may also be referred to as a system-level chip, a system chip, a chip system, or a system-on-chip chip, etc.

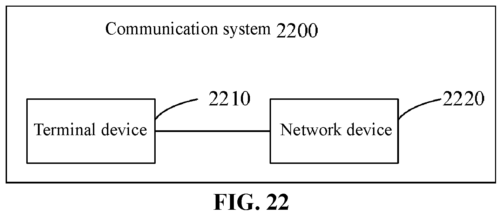

FIG. 22 is a schematic block diagram of a communication system 2200 according to an embodiment of the disclosure. As illustrated in FIG. 22, the communication system 2200 includes a terminal device 2210 and a network device 2220.

The terminal device 2210 may be configured to implement corresponding functions in the above methods implemented by the terminal device, and the network device 2220 may be configured to implement corresponding functions in the above methods implemented by the network device, which are not elaborated here for brevity.

It should be understood that the processor in the embodiments of the disclosure may be an integrated circuit chip with a signal processing capability. During implementation, each operation of the above method embodiments may be completed by an integrated logic circuit of hardware in the processor or an instruction in form of software. The processor may be a general-purpose processor, a Digital Signal Processor (DSP), an Application Specific Integrated Circuit (ASIC), a Field Programmable Gate Array (FPGA), or another programmable logical device, discrete gate or transistor logical device and discrete hardware component. Each method, operation and logical block diagram disclosed in the embodiments of the disclosure may be implemented or executed. The general-purpose processor may be a microprocessor or the processor may also be any conventional processor and the like. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes operations of the above methods in combination with hardware thereof.

It may be understood that the memory in the embodiments of the disclosure may be a volatile memory or a non-volatile memory, or may include both volatile and non-volatile memories. The non-volatile memory may be a ROM, a PROM, an Erasable PROM (EPROM), an EEPROM, or a flash memory. The volatile memory may be a RAM used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the above memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include but not limited to memories of these and any other proper types.

An embodiment of the disclosure further provides a computer-readable storage medium, configured to store a computer program.

In an example, the computer-readable storage medium may be applied to the network device in the embodiments of the disclosure, and the computer program enables a computer to execute corresponding processes in each method according to the embodiments of the disclosure implemented by the network device, which are not elaborated here for brevity.

In an example, the computer-readable storage medium may be applied to the mobile terminal/terminal device in the embodiments of the disclosure, and the computer program enables a computer to execute corresponding processes in each method according to the embodiments of the disclosure implemented by the mobile terminal/terminal device, which are not elaborated here for brevity.

An embodiment of the disclosure further provides a computer program product, including computer program instructions.

In an example, the computer program product may be applied to the mobile terminal/terminal device in the embodiments of the disclosure, and the computer program instructions enable a computer to execute corresponding processes in each method according to the embodiments of the disclosure implemented by the mobile terminal/terminal device, which are not elaborated here for brevity.

An embodiment of the disclosure further provides a computer program.

In an example, the computer program may be applied to the mobile terminal/terminal device in the embodiments of the disclosure, and when the computer program is run on a computer, the computer program enables the computer to execute corresponding processes in each method according to the embodiments of the disclosure implemented by the mobile terminal/terminal device, which are not elaborated here for brevity.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, apparatus and unit described above may refer to the corresponding processes in the method embodiments and will not be elaborated herein for convenient and brief description.

In some embodiments provided by the disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the disclosure. The abovementioned storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

**Claims**

1. A time synchronization method, comprising:
   performing, by a first terminal, synchronization of a first time, wherein the first time is a time based on a time sensitive network, TSN, and the first terminal is a TSN ingress node of a first network.

2. The method of claim 1, further comprising:
   performing, by the first terminal, synchronization of a second time, wherein the second time is a time based on a mobile network or a Global Navigation Satellite System, GNSS.

3. The method of claim 2, wherein the second time is configured to:

   determine the first time; or
   determine a first delay required for a message or packet to pass through the first network, the delay corresponding to the first time; or
   determine a second delay required for the message or packet to pass through the first network, the second delay corresponding to the second time.

4. The method of claim 2 or 3, wherein performing, by the first terminal, synchronization of the second time comprises:
   performing, by the first terminal, synchronization of the second time based on a first synchronization mode, wherein the first synchronization mode is configured to indicate a first synchronization source, and the first synchronization source is a synchronization source of the first terminal.

5. The method of claim 4, wherein the first synchronization mode is further configured to indicate a second synchronization source, the second synchronization source is a synchronization source of a second terminal, and the second terminal is a TSN egress node of the first network.

6. The method of claim 4 or 5, wherein the first synchronization source is one of a base station, the GNSS, a second terminal, or a third terminal.

7. The method of claim 6, wherein the first synchronization source is the GNSS, and the first terminal has GNSS capability.

8. The method of claim 6 or 7, wherein the first terminal skips performing propagation delay compensation, PDC, with the first synchronization source in response to the first synchronization source being the GNSS.

9. The method of claim 6, wherein the first terminal performs propagation delay compensation, PDC, with the first synchronization source in response to the first synchronization source being the base station or the second terminal or the third terminal.

10. The method of any one of claims 4 to 9, wherein the first synchronization mode is based on at least one of:

    first information for indicating whether the first terminal supports sidelink, SL, vehicle to everything, V2X, or the GNSS;
    second information for indicating whether the first terminal establishes a connection with a second terminal;
    third information for indicating a position relationship between the first terminal and a base station;
    fourth information for indicating whether the first terminal is in coverage of the GNSS;
    fifth information for indicating whether the first terminal is in coverage of the base stati on;
    sixth information for indicating a TSN end station; or
    seventh information for indicating whether a service is a TSN service or a time sensitive service.

11. The method of any one of claims 4 to 10, wherein determination conditions of the first synchronization mode comprise at least one of:

different terminals supporting different synchronization modes, and different synchronization modes corresponding to different synchronization sources or using different interfaces;
the first terminal supporting at least two scenarios, and different scenarios corresponding to different synchronization sources or using different interfaces;
the first terminal supporting at least two synchronization modes; or
the first terminal supporting at least two capabilities, and different capabilities corresponding to different synchronization sources.

12. The method of any one of claims 4 to 11, wherein the first synchronization mode is determined by a first device, and the first device is one of a core network device, a TSN device, a base station, the first terminal, the second terminal, or a fourth terminal with a control function.

13. The method of claim 12, wherein in response to the first device being one of the core network device, the TSN device, the base station, the second terminal or the fourth terminal, the method further comprises at least one of:

receiving, by the first terminal, first indication information sent by the first device, wherein the first indication information is configured to indicate the first synchronization mode; or
receiving, by the first terminal, second indication information sent by the first device, wherein the second indication information is configured to indicate whether the first terminal performs propagation delay compensation, PDC.

14. The method of any one of claims 1 to 13, wherein performing, by the first terminal, synchronization of the first time comprises:
performing, by the first terminal, synchronization of the first time based on a second synchronization mode, wherein the second synchronization mode is transmission of a first message or time synchronization based on the first message.

15. The method of claim 14, wherein the first message is configured to:

remove a gap between the first time and a second time; or
determine a time required to pass through the first network; or
determine the first time corresponding to a TSN end station or a TSN egress node.

16. The method of claim 15, wherein the first terminal is a first Device-side TSN Translator, DS-TT, entity; or, the first terminal corresponds to the first DS-TT entity.

17. The method of any one of claims 14 to 16, wherein the first message carries at least one of a timestamp of a clock source of the TSN, correction information, or clock frequency information.

18. The method of any one of claims 14 to 17, wherein the first message is an event message.

19. The method of any one of claims 14 to 18, wherein the second synchronization mode is determined by a second device, and the second device is one of a core network device, a TSN device, a base station, the first terminal, a second terminal, or a fourth terminal with a control function.

20. The method of claim 19, wherein in response to the second device being one of the core network device, the TSN device, the base station, the second terminal or the fourth terminal, the method further comprises:
receiving, by the first terminal, third indication information sent by the second device, wherein the third indication information is configured to indicate the second synchronization mode.

21. The method of any one of claims 14 to 20, wherein performing, by the first terminal, synchronization of the first time based on the second synchronization mode comprises at least one of:

receiving, by the first terminal, the first message sent by a fifth terminal;
generating, by the first terminal, a first timestamp, wherein the first timestamp indicates a time when the first terminal receives the first message; or
adding, by the first terminal, the first timestamp to the first message, wherein the first timestamp corresponds to a second time.

22. The method of claim 21, wherein the first timestamp is configured to determine at least one of:

a residence time of the first message in the first network;
a time when the first message enters the first network;
a time when the first message enters a TSN end station; or
a time when the first message enters the TSN ingress node.

23. The method of claim 21 or 22, wherein performing, by the first terminal, synchronization of the first time with a second terminal based on the second synchronization mode further comprises:
sending, by the first terminal, the first message to the second terminal.

24. A time synchronization method, comprising:
performing, by a second terminal, synchronization of a first time, wherein the first time is a time based on a time sensitive network, TSN, and the second terminal is a TSN egress node of a first network.

25. The method of claim 24, further comprising:
performing, by the second terminal, synchronization of a second time, wherein the second time is a time based on a mobile network or a Global Navigation Satellite System, GNSS.

26. The method of claim 25, wherein the second time is configured to:

determine the first time; or
determine a first delay required for a message or packet to pass through the first network, the delay corresponding to the first time; or
determine a second delay required for the message or packet to pass through the first network, the second delay corresponding to the second time.

27. The method of claim 25 or 26, wherein performing, by the second terminal, synchronization of the second time comprises:
performing, by the first terminal, synchronization of the second time based on a third synchronization mode, wherein the third synchronization mode is configured to indicate a second synchronization source, and the second synchronization source is a synchronization source of the second terminal.

28. The method of claim 27, wherein the third synchronization mode is further configured to indicate a first synchronization source, the first synchronization source is a synchronization source of a first terminal, and the first terminal is a TSN ingress node of the first network.

29. The method of claim 27 or 28, wherein the second synchronization source is one of a base station, the GNSS, a first terminal, or a third terminal.

30. The method of claim 29, wherein the second synchronization source is the GNSS, and the second terminal has GNSS capability.

31. The method of claim 29 or 30, wherein the second terminal skips performing propagation delay compensation, PDC, with the second synchronization source in response to the second synchronization source being the GNSS.

32. The method of claim 29, wherein the second terminal performs propagation delay compensation, PDC, with the second synchronization source in response to the second synchronization source being the base station or the first terminal or the third terminal.

33. The method of any one of claims 27 to 32, wherein the third synchronization mode is based on at least one of:

eighth information for indicating whether the second terminal supports sidelink, SL, vehicle to everything, V2X, or the GNSS;
ninth information for indicating whether the second terminal establishes a connection with a first terminal;
tenth information for indicating a position relationship between the second terminal and a base station;

eleventh information for indicating whether the second terminal is in coverage of the GNSS;

twelfth information for indicating whether the second terminal is in coverage of the base station;

thirteenth information for indicating a TSN end station; or

fourteenth information for indicating whether a service is a TSN service or a time sensitive service.

34. The method of any one of claims 27 to 33, wherein determination conditions of the third synchronization mode comprise at least one of:

different terminals supporting different synchronization modes, and different synchronization modes corresponding to different synchronization sources or using different interfaces;

the second terminal supporting at least two scenarios, and different scenarios corresponding to different synchronization sources or using different interfaces;

the second terminal supporting at least two synchronization modes; or

the second terminal supporting at least two capabilities, and different capabilities corresponding to different synchronization sources.

35. The method of any one of claims 27 to 34, wherein the third synchronization mode is determined by a first device, and the first device is one of a core network device, a TSN device, a base station, the first terminal, the second terminal, or a fourth terminal with a control function.

36. The method of claim 35, wherein in response to the first device being one of the core network device, the TSN device, the base station, the first terminal or the fourth terminal, the method further comprises at least one of:

receiving, by the second terminal, fourth indication information sent by the first device, wherein the fourth indication information is configured to indicate a first synchronization mode; or

receiving, by the second terminal, fifth indication information sent by the first device, wherein the fifth indication information is configured to indicate whether the second terminal performs propagation delay compensation, PDC.

37. The method of any one of claims 24 to 36, wherein performing, by the second terminal, synchronization of the first time comprises:

performing, by the first terminal, synchronization of the first time based on a second synchronization mode, wherein the second synchronization mode is transmission of a first message or time synchronization based on the first message.

38. The method of claim 37, wherein the first message is configured to:

remove a gap between the first time and a second time; or

determine a time required to pass through the first network; or

determine the first time corresponding to a TSN end station or the second terminal.

39. The method of claim 38, wherein the second terminal is a second Device-side TSN Translator, DS-TT, entity; or, the second terminal corresponds to the second DS-TT entity.

40. The method of any one of claims 38 and 39, wherein the first message carries at least one of a timestamp of a clock source of the TSN, correction information, or clock frequency information.

41. The method of any one of claims 37 to 40, wherein the first message is an event message.

42. The method of any one of claims 37 to 41, wherein the second synchronization mode is determined by a second device, and the second device is one of a core network device, a TSN device, a base station, a first terminal, the second terminal, or a fourth terminal with a control function.

43. The method of claim 42, wherein in response to the second device being one of the core network device, the TSN device, the base station, the second terminal or the fourth terminal, the method further comprises:

receiving, by the second terminal, sixth indication information sent by the second device, wherein the sixth indication information is configured to indicate the second synchronization mode.

**44.** The method of any one of claims 37 to 43, wherein performing, by the second terminal, synchronization of the first time based on the second synchronization mode comprises at least one of:

> receiving, by the second terminal, the first message sent by the first terminal, wherein the first message carries a first timestamp;
> generating, by the second terminal, a second timestamp, wherein the second timestamp indicates a time when the second terminal receives the first message; or
> determining, by the second terminal, a first residence time based on the first timestamp and the second timestamp, wherein the first residence time is a residence time of the first message in the first network.

**45.** The method of claim 44, wherein the first message carries a first clock frequency ratio that is a ratio of a first clock frequency to a second clock frequency, the first clock frequency is a clock frequency corresponding to the first time, and the second clock frequency is a clock frequency corresponding to the second time,

performing, by the second terminal, synchronization of the first time based on the second synchronization mode further comprises:

determining, by the second terminal, a second residence time based on the first residence time and the first clock frequency ratio.

**46.** The method of claim 45, wherein the second residence time is a time period based on the TSN; and/or, the first residence time is a time period based on a mobile network or a Global Navigation Satellite System, GNSS.

**47.** The method of any one of claims 44 to 46, further comprising at least one of:

> adding, by the second terminal, the first residence time to the first message;
> adding, by the second terminal, a second residence time to the first message, wherein the second residence time is a residence time of the first message in the first network, and the second residence time is a time based on the TSN;
> deleting, by the second terminal, the second timestamp from the first message; or
> sending, by the second terminal, the first message to a sixth terminal.

**48.** A time synchronization apparatus, applicable to a first terminal, comprising:
a first synchronization unit, configured to perform synchronization of a first time, wherein the first time is a time based on a time sensitive network, TSN, and the first terminal is a TSN ingress node of a first network.

**49.** A time synchronization apparatus, applicable to a second terminal, comprising:
a third synchronization unit, configured to perform synchronization of a first time, wherein the first time is a time based on a time sensitive network, TSN, and the second terminal is a TSN egress node of a first network.

**50.** A terminal device, comprising:

> a processor; and
> a memory, configured to store a computer program,
> wherein the processor is configured to call and run the computer program stored in the memory to execute the method of any one of claims 1 to 23.

**51.** A terminal device, comprising:

> a processor; and
> a memory, configured to store a computer program,
> wherein the processor is configured to call and run the computer program stored in the memory to execute the method of any one of claims 24 to 47.

**52.** A chip, comprising:
a processor, configured to call and run a computer program from a memory, to enable a device installed with the chip to execute the method of any one of claims 1 to 23.

**53.** A chip, comprising:
a processor, configured to call and run a computer program from a memory, to enable a device installed with the chip to execute the method of any one of claims 24 to 47.

**54.** A computer-readable storage medium, configured to store a computer program, the computer program enabling a computer to execute the method of any one of claims 1 to 23.

**55.** A computer-readable storage medium, configured to store a computer program, the computer program enabling a computer to execute the method of any one of claims 24 to 47.

**56.** A computer program product, comprising computer program instructions, the computer program instructions enabling a computer to execute the method of any one of claims 1 to 23.

**57.** A computer-readable storage medium, configured to store a computer program, the computer program enabling a computer to execute the method of any one of claims 24 to 47.

**58.** A computer program, enabling a computer to perform the method of any one of claims 1 to 23.

**59.** A computer program, enabling a computer to perform the method of any one of claims 24 to 47.

**FIG. 1**

**FIG. 2**

**FIG. 3**

FIG. 4

FIG. 5

**FIG. 6**

A first terminal performs synchronization of a first time, and the first time is a time based on a TSN

S7011

**FIG. 7A**

A second terminal performs synchronization of a first time, and the first time is a time based on a TSN

S7012

**FIG. 7B**

First terminal

Second terminal

S7013, synchronization of a first time

**FIG. 7C**

eNB

UE1

UE2

**FIG. 8**

GNSS

UE1

UE2

**FIG. 9**

eNB

UE1          UE2

**FIG. 10**

GNSS

UE1          UE2

**FIG. 11**

UE1   First message →   UE2

**FIG. 12**

1301          1302

DS-TT entity   UE1          UE2   DS-TT entity

**FIG. 13**

**FIG. 14**

**FIG. 15**

GNSS

Synchronization
signal,gPTP,PDC

UE1

UE2

syncTxThreshOoC

**FIG. 16**

eNB

UE1,
TSN node

SIB9+P
DC

Synchronization
signal,PDC,gPTP

UE3 TSN
node

SIB9+PDC

gPTP

UE2,
TSN node

**FIG. 17**

Time synchronization apparatus
1800

First synchronization unit 1801

**FIG. 18**

Time synchronization apparatus
1900

Third synchronization unit 1901

**FIG. 19**

Communication device 2000

Memory
2020

Processor
2010

Transceiver
2030

**FIG. 20**

Chip 2100

Input interface
2130

Processor
2110

Memory
2120

Output interface
2140

**FIG. 21**

Communication system 2200

Terminal device — 2210          Network device — 2220

**FIG. 22**

## INTERNATIONAL SEARCH REPORT

| International application No. |
|---|
| **PCT/CN2021/108511** |

| A. | CLASSIFICATION OF SUBJECT MATTER |
|---|---|

H04W 56/00(2009.01)i

According to International Patent Classification (IPC) or to both national classification and IPC

| B. | FIELDS SEARCHED |
|---|---|

Minimum documentation searched (classification system followed by classification symbols)

H04W; H04L; H04J

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 时钟 时间 同步 节点 入节点 出节点 端点 终端 TSN synchroni+ node delay interface sidelink V2X

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112217615 A (HUAWEI TECHNOLOGIES CO., LTD.) 12 January 2021 (2021-01-12) description, paragraphs [0003]-[0076] | 1-59 |
| X | CN 112997456 A (ZTE CORP.) 18 June 2021 (2021-06-18) description, paragraph [0040] | 1-59 |
| X | CN 112586033 A (TELEFONAKTIEBOLAGET LM ERICSSON (PUBL)) 30 March 2021 (2021-03-30) description, paragraph [0098] | 1-59 |
| X | CN 111867073 A (RESEARCH INSTITUTE OF CHINA MOBILE COMMUNICATIONS CORPORATION et al.) 30 October 2020 (2020-10-30) description, paragraph [0369] | 1-59 |
| X | WO 2021013338 A1 (NOKIA TECHNOLOGIES OY) 28 January 2021 (2021-01-28) description, p. 10, paragraph 3 | 1-59 |

☐ Further documents are listed in the continuation of Box C.    ☑ See patent family annex.

| | |
|---|---|
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **11 April 2022** | **26 April 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/108511**

| Patent document cited in search report | | | Publication date (day/month/year) | Patent family member(s) | | | Publication date (day/month/year) |
|---|---|---|---|---|---|---|---|
| CN | 112217615 | A | 12 January 2021 | WO | 2021004191 | A1 | 14 January 2021 |
| CN | 112997456 | A | 18 June 2021 | WO | 2020034464 | A1 | 20 February 2020 |
| | | | | KR | 20210091166 | A | 21 July 2021 |
| | | | | EP | 3881502 | A1 | 22 September 2021 |
| | | | | US | 2021314807 | A1 | 07 October 2021 |
| CN | 112586033 | A | 30 March 2021 | WO | 2020043315 | A1 | 05 March 2020 |
| | | | | IN | 201837039852 | A | 12 June 2020 |
| | | | | EP | 3844997 | A1 | 07 July 2021 |
| | | | | US | 2021227452 | A1 | 22 July 2021 |
| CN | 111867073 | A | 30 October 2020 | WO | 2020221165 | A1 | 05 November 2020 |
| WO | 2021013338 | A1 | 28 January 2021 | | None | | |

Form PCT/ISA/210 (patent family annex) (January 2015)